(19) Europäisches Patentamt
European Patent Office
Office européen des brevets

(11) EP 2 787 566 A1

(12) EUROPEAN PATENT APPLICATION
published in accordance with Art. 153(4) EPC

(43) Date of publication:
08.10.2014 Bulletin 2014/41

(51) Int Cl.:
H01M 8/04 (2006.01)     H01M 8/10 (2006.01)

(21) Application number: 12853089.6

(22) Date of filing: 13.11.2012

(86) International application number:
PCT/JP2012/007266

(87) International publication number:
WO 2013/080463 (06.06.2013 Gazette 2013/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.11.2011 JP 2011259040

(71) Applicant: Toyota Jidosha Kabushiki Kaisha
Toyota-shi, Aichi 471-8571 (JP)

(72) Inventors:
• JOMORI, Shinji
Toyota-shi
Aichi 471-8571 (JP)

• MATSUSUE, Masaaki
Toyota-shi
Aichi 471-8571 (JP)
• IKEDA, Koichiro
Toyota-shi
Aichi 471-8571 (JP)

(74) Representative: TBK
Bavariaring 4-6
80336 München (DE)

(54) **FUEL CELL SYSTEM AND METHOD FOR CONTROLLING FUEL CELL SYSTEM**

(57)     A fuel cell system 100 includes a fuel cell 10 and a controller 20 that controls a voltage of the fuel cell 10. The controller 20 sets a target increase amount $\Delta V$, based on a target voltage which is a target value of voltage relative to a predetermined electric current of the fuel cell 10. The controller 20 sets a processing condition of a temporary voltage drop process, based on the target increase amount $\Delta V$. The controller 20 performs a temporary voltage drop process under the set processing condition. The temporary voltage drop process temporarily drops the voltage of the fuel cell 10 based on a power generation characteristic of the fuel cell 10, so as to cause a temporary increase in electric current of the fuel cell 10 and change the power generation characteristic of the fuel cell 10.

Fig.7A

Fig.7B

**Description**

Technical Field

The present invention relates to a fuel cell.

Background Art

A polymer electrolyte fuel cell (hereinafter simply called "fuel cell") has a membrane electrode assembly which includes electrodes placed on both surfaces of an electrolyte membrane having good proton conductivity in the wet state, as a power generation element (e.g., Patent Literature 1). A fuel cell mounted on a fuel cell vehicle may fall into a high temperature state that has an extremely high operating temperature, when the operation of the fuel cell is continued in an environment of remarkably high ambient temperature (for example, temperature of about 40°C) or when high load operation is continued for a long time period, for example, during hill climbing or during acceleration. The fuel cell in the high temperature state may have the reduced proton conductivity in the electrolyte membrane. This may lead to degradation of the power generation performance and deterioration of the controllability of the fuel cell, for example, by making it difficult to output a desired electric power. This problem is not limited to the fuel cell vehicle but is commonly found in fuel cell systems including fuel cells.

Citation List

Patent Literature

   PTL 1: JP 2005-129252A
   PTL 2: JP 2010-027297A

SUMMARY OF INVENTION

Technical Problem

An object of the invention is to provide a technology of improving the controllability of a fuel cell.

Solution to Problem

The invention may be implemented by any of the following aspects and embodiments, in order to solve at least part of the above problems.

[Aspect 1]

There is provided a fuel cell system, comprising: a fuel cell; and a controller that controls a voltage of the fuel cell. The controller sets a processing condition to change a power generation characteristic of the fuel cell expressed as a relationship between electric current and voltage, based on a target voltage which is a target value of voltage relative to a predetermined electric current of the fuel cell. The controller performs a temporary voltage drop process under the processing condition, wherein the temporary voltage drop process temporarily drops the voltage of the fuel cell based on the power generation characteristic of the fuel cell, so as to cause a temporary increase in electric current of the fuel cell and change the power generation characteristic of the fuel cell.
Even when the power generation performance of the fuel cell is degraded, for example, in the high temperature state, this fuel cell system performs the temporary voltage drop process under the adequate processing condition, thus changing the power generation characteristic of the fuel cell and raising the voltage of the fuel cell to the target voltage. This accordingly improves the controllability of voltage control of the fuel cell.

[Aspect 2]

There is provided the fuel cell system according to Aspect 1, wherein the controller obtains in advance a relationship between an amount of voltage increase, which is an increased amount of the voltage relative to the predetermined electric current of the fuel cell by a change of the power generation characteristic when the temporary voltage drop process is performed, and the processing condition of the temporary voltage drop process. The controller uses the relationship and sets the processing condition, based on a target voltage increase amount, which is a difference between a present voltage relative to the predetermined electric current and the target voltage.

This fuel cell system uses the relationship between the amount of voltage increased by the temporary voltage drop process and the processing condition of the temporary voltage drop process and thereby adequately sets the processing condition to raise the voltage of the fuel cell to the target voltage.

[Aspect 3]

There is provided the fuel cell system according to Aspect 2, wherein the processing condition is at least one of: a minimum voltage in the temporary voltage drop process; a retention period when the minimum voltage is maintained in the temporary voltage drop process; and a voltage rise rate for recovery of voltage in the temporary voltage drop process.

This fuel cell system adequately sets the minimum voltage in the temporary voltage process, the period when the minimum voltage is maintained and the voltage rise rate (current drop rate) for recovery of voltage as the processing condition of the temporary voltage drop process according to the increase amount of target voltage.

[Aspect 4]

There is provided the fuel cell system according to either Aspect 2 or Aspect 3, further comprising an operating state detector that detects an operating state of the fuel cell immediately before execution of the temporary voltage drop process. The controller obtains in advance a relationship among the amount of voltage increase, which is the increased amount of the voltage relative to the predetermined electric current of the fuel cell by the change of the power generation characteristic when the temporary voltage drop process is performed, the operating state of the fuel cell and the processing condition of the temporary voltage drop process. The controller uses the relationship and sets the processing condition, based on the operating state of the fuel cell and the target voltage.

This fuel cell system adequately sets the processing condition of the temporary voltage drop process according to the increase amount of target voltage and the operating state of the fuel cell.

[Aspect 5]

There is provided the fuel cell system according to Aspect 4, wherein the operating state of the fuel cell immediately before execution of the temporary voltage drop process is at least one of: an accumulated time of a period when the fuel cell is in a high temperature state having higher temperature than a predetermined temperature; and a catalyst utilization rate indicating a state of a catalyst supported on an electrode of the fuel cell.

This fuel cell system adequately sets the processing condition of the temporary voltage drop process according to the increase amount of target voltage, the accumulated time of the period when the fuel cell is in the high temperature state and/or the catalyst utilization rate of the fuel cell.

[Aspect 6]

There is provided the fuel cell system according to any one of Aspects 2 to 5, further comprising a voltage measurement unit that measures the voltage of the fuel cell. The controller corrects the relationship, in order to reduce a difference between an observed value of voltage of the fuel cell after execution of the temporary voltage drop process and the target voltage.

This fuel cell system sets the more adequate processing condition to achieve a desired voltage increase in the temporary voltage drop process.

[Aspect 7]

There is provided the fuel cell system according to any one of Aspects 1 to 6, further comprising a secondary battery that is controlled by the controller to be charged and discharged and assists an output electric power of the fuel cell in the temporary voltage drop process. The controller specifies in advance a lower limit value of a state of charge of the secondary battery, which is a threshold value to limit discharging of the secondary battery, and manages the state of charge of the secondary battery not to make the state of charge of the secondary battery lower than the lower limit value. The controller reduces the lower limit value during execution of the temporary voltage drop process, so as to relieve a condition of limiting discharging of the secondary battery.

This fuel cell system ensures compensation of electric power by the secondary battery during execution of the temporary voltage drop process.

[Aspect8]

There is provided a control method of a fuel cell system, comprising:

(a) a computer setting a processing condition to change a power generation characteristic of a fuel cell expressed as a relationship between electric current and voltage, based on a target voltage which is a target value of voltage relative to a predetermined electric current of the fuel cell, and
(b) the computer performing a temporary voltage drop process under the processing condition set based on the target voltage, wherein the temporary voltage drop process temporarily drops a voltage of the fuel cell based on the power generation characteristic of the fuel cell, so as to cause a temporary increase in electric current of the fuel cell and change the power generation characteristic of the fuel cell.

Even when the power generation performance of the fuel cell is degraded, for example, in the high temperature state, this control method performs the temporary voltage drop process under the adequate processing condition, thus changing the power generation characteristic of the fuel cell and raising the voltage of the fuel cell to the target voltage. This accordingly improves the controllability of voltage control of the fuel cell.

The invention may be implemented by any of various aspects: for example, a fuel cell system and a vehicle equipped with the fuel cell system. The invention may also be implemented by any of other aspects, such as a control method of a fuel cell system, a control device and a program that cause the control method to be performed and a non-transitory storage medium in which the program is stored.

BRIEF DESCRIPTION OF DRAWINGS

Fig. 1 is a schematic diagram illustrating the configuration of a fuel cell system;
Fig. 2 is a schematic diagram illustrating the electrical configuration of the fuel cell system;
Fig. 3 is a chart showing a control procedure of system control by a controller of the fuel cell system;
Fig. 4 is a diagram illustrating output control of the fuel cell system during ordinary operation;
Fig. 5 is a diagram illustrating degradation of power generation performance of the fuel cell;
Figs. 6A to 6C are diagrams illustrating temporary improvement of the power generation performance of the fuel cell by a temporary voltage drop process;
Figs. 7A and 7B are diagrams illustrating voltage control of the fuel cell in power generation characteristic recovery operation;
Fig. 8 is a chart showing a specific control procedure of the power generation characteristic recovery operation;
Fig. 9 is a diagram showing a relationship between an amount of voltage increase after execution of the temporary voltage drop process and an amount of voltage drop in the temporary voltage drop process;
Fig. 10 is a chart showing a control procedure of power generation characteristic recovery operation according to a second embodiment;
Fig. 11 is a diagram showing relationships between a voltage rise rate for recovery of voltage after a temporary voltage drop of the fuel cell and an amount of voltage increase;
Fig. 12 is a diagram illustrating an exemplary map used to obtain a voltage rise rate based on the amount of voltage increase;
Fig. 13 is a chart showing a control procedure of system control in a fuel cell system according to a third embodiment;
Fig. 14 is a chart showing a control procedure of power generation characteristic recovery operation according to the third embodiment;
Fig. 15 is a diagram showing relationships between an amount of voltage increased by the temporary voltage drop process and a high temperature duration time;
Fig. 16 is a diagram illustrating exemplary maps used to specify a processing condition of the temporary voltage drop process;
Fig. 17 is a chart showing a procedure of power generation characteristic recovery operation according to a fourth embodiment;
Fig. 18 is a diagram illustrating an exemplary map representing a relationship between a cathode potential and a catalyst utilization rate;
Fig. 19 is a chart showing a control procedure of power generation characteristic recovery operation according to a fourth embodiment; and
Fig. 20 is a chart showing a procedure of a preparation process of a secondary battery.

DESCRIPTION OF EMBODIMENTS

A. First Embodiment

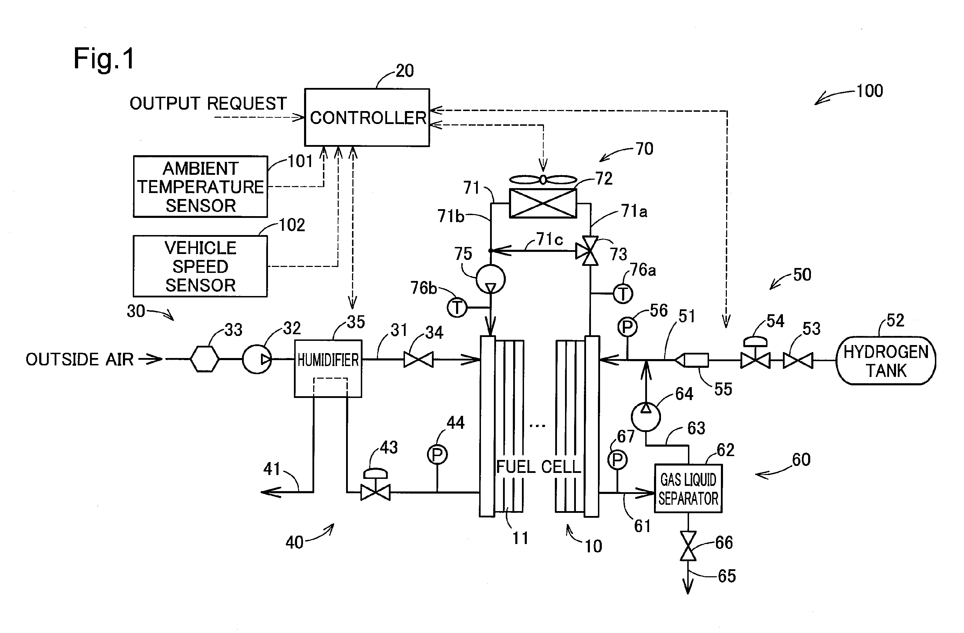

Fig. 1 is a schematic diagram illustrating the configuration of a fuel cell system according to one embodiment of the invention. This fuel cell system 100 is mounted on, for example, a fuel cell vehicle and outputs electric power used as driving force in response to a driver's request. The fuel cell system 100 includes a fuel cell 10, a controller 20, a cathode gas supply structure 30, a cathode gas discharge structure 40, an anode gas supply structure 50, an anode gas circulation and discharge structure 60 and a cooling medium supply structure 70.

The fuel cell 10 is a polymer electrolyte fuel cell that receives supplies of hydrogen (anode gas) and the air (cathode gas) as reactive gases and generates electricity. The fuel cell 10 has a stack structure formed by stacking a plurality of power generation elements 11 called unit cells. Each of the power generation elements 11 includes a membrane electrode assembly (not shown) as a power generating body provided by placing electrodes on both surfaces of an electrolyte membrane and two separators (not shown) placed across the membrane electrode assembly.

The electrolyte membrane may be made of a solid polymer thin film having good proton conductivity in the wet state. The electrodes may be made of conductive particles having a catalyst for accelerating an electricity generating reaction supported thereon. The catalyst may be, for example, platinum (Pt), and the conductive particles may be, for example, carbon (C) particles.

The controller 20 is implemented by a microcomputer including a central processing unit and a main storage unit. The controller 20 receives a request of power output and controls the respective components described below in response to this request to cause the fuel cell 10 to generate electricity.

The cathode gas supply structure 30 includes a cathode gas piping 31, an air compressor 32, an air flow meter 33, an on-off valve 34 and a humidifier 35. The cathode gas piping 31 is provided as a piping connected to the cathode side of the fuel cell 10. The air compressor 32 is connected with the fuel cell 10 via the cathode gas piping 31 to supply the outside air taken in and compressed as the cathode gas to the fuel cell 10.

The air flow meter 33 is located in the upstream of the air compressor 32 to measure the amount of the outside air taken in by the air compressor 32 and send the measurement value to the controller 20. The controller 20 actuates the air compressor 32 based on this measurement value and thereby controls the supply amount of the air to the fuel cell 10.

The on-off valve 34 is provided between the air compressor 32 and the fuel cell 10 and is opened and closed according to the flow of the air supply through the cathode gas piping 31. More specifically, the on-off valve 34 is normally in the closed position and is opened when the air having a specified pressure is supplied from the air compressor 32 to the cathode gas piping 31.

The humidifier 35 humidifies the high-pressure air fed from the air compressor 32. The controller 20 controls the humidifying amount of the air supplied to the fuel cell 10 by the humidifier 35 and adjusts the wet state inside the fuel cell 10, in order to maintain the electrolyte membrane in the wet state and achieve the good proton conductivity. The humidifier 35 is connected with a cathode off-gas piping 41 to use the moisture in an off-gas for humidifying the high-pressure air.

The cathode gas discharge structure 40 includes the cathode off-gas piping 41, a pressure regulator 43 and a pressure measurement unit 44. The cathode off-gas piping 41 is provided as a piping connected to the cathode side of the fuel cell 10 to discharge a cathode off-gas out of the fuel cell system 100. The pressure regulator 43 regulates the pressure of the cathode off-gas in the cathode off-gas piping 41 (back pressure on the cathode side of the fuel cell 10). The pressure measurement unit 44 is provided in the upstream of the pressure regulator 43 to measure the pressure of the cathode off-gas and send the measurement value to the controller 20. The controller 20 adjusts the valve opening of the pressure regulator 43, based on the measurement value of the pressure measurement unit 44.

The anode gas supply structure 50 includes an anode gas piping 51, a hydrogen tank 52, an on-off valve 53, a regulator 54, a hydrogen supply device 55 and a pressure measurement unit 56. The hydrogen tank 52 is connected with the anodes of the fuel cell 10 via the anode gas piping 51 to supply hydrogen filled in the tank to the fuel cell 10. The fuel cell system 100 may include a reforming unit that reforms a hydrocarbon fuel to produce hydrogen, in place of the hydrogen tank 52, as the hydrogen supply source.

The on-off valve 53, the regulator 54, the hydrogen supply device 55 and the pressure measurement unit 56 are provided on the anode gas piping 51 in this order from the upstream side (hydrogen tank 52-side). The on-off valve 53 is opened and closed in response to a command from the controller 20 to control the inflow of hydrogen from the hydrogen tank 52 to the upstream side of the hydrogen supply device 55. The regulator 54 is provided as a pressure reducing valve to regulate the pressure of hydrogen on the upstream side of the hydrogen supply device 55, and the valve opening of the regulator 54 is controlled by the controller 20.

The hydrogen supply device 55 may be, for example, an injector that is an electromagnetically-driven on-off valve. The pressure measurement unit 56 measures the pressure of hydrogen on the downstream side of the hydrogen supply device 55 and sends the measurement value to the controller 20. The controller 20 controls the hydrogen supply device 55 based on the measurement value of the pressure measurement unit 56, so as to control the amount of hydrogen supplied to the fuel cell 10.

The anode gas circulation and discharge structure 60 includes an anode off-gas piping 61, a gas liquid separator 62, an anode gas circulation piping 63, a hydrogen circulation pump 64, an anode water discharge piping 65, a drain valve 66 and a pressure measurement unit 67. The anode off-gas piping 61 is provided as a piping that connects an outlet of the anodes of the fuel cell 10 with the gas liquid separator 62 to introduce an anode off-gas including unreacted gases (for example, hydrogen and nitrogen) that have not been used for the electricity generating reaction, to the gas liquid separator 62.

The gas liquid separator 62 is connected with the anode gas circulation piping 63 and the anode water discharge piping 65. The gas liquid separator 62 separates a gas component included in the anode off-gas from a fluid and introduces the gas component to the anode gas circulation piping 63 while introducing the fluid to the anode water discharge piping 65.

The anode gas circulation piping 63 is connected with the anode gas piping 51 at a position in the downstream of the hydrogen supply device 55. The hydrogen circulation pump 64 is provided on the anode gas circulation piping 63. Hydrogen included in the gas component separated by the gas liquid separator 62 is fed to the anode gas piping 51 by this hydrogen circulation pump 64. The fuel cell system 100 circulates hydrogen included in the anode off-gas and resupplies the hydrogen to the fuel cell 10 in this manner, thus improving the use efficiency of hydrogen.

The anode water discharge piping 65 is provided as a piping to discharge the fluid separated by the gas liquid separator 62 out of the fuel cell system 100. The drain valve 66 is provided on the anode water discharge piping 65 and is opened and closed in response to a command from the controller 20. The controller 20 normally closes the drain valve 66 during operation of the fuel cell system 100 and opens the drain valve 66 at a predetermined water discharge timing or at a discharge timing of an inert gas included in the anode off-gas.

The pressure measurement unit 67 of the anode gas circulation and discharge structure 60 is provided on the anode off-gas piping 61. The pressure measurement unit 67 measures the pressure of the anode off-gas (back pressure on the anode side of the fuel cell 10) in the vicinity of an outlet of a hydrogen manifold of the fuel cell 10 and sends the measurement result to the controller 20.

The cooling medium supply structure 70 includes a cooling medium piping 71, a radiator 72, a three-way valve 73, a cooling medium circulation pump 75 and two cooling medium temperature measurement units 76a and 76b. The cooling medium piping 71 is provided as a piping to circulate a cooling medium for cooling the fuel cell 10 and includes an upstream-side pipe 71a, a downstream-side pipe 71b and a bypass pipe 71c.

The upstream-side pipe 71a connects an outlet manifold for the cooling medium provided in the fuel cell 10 with an inlet of the radiator 72. The downstream-side pipe 71b connects an inlet manifold for the cooling medium provided in the fuel cell 10 with an outlet of the radiator 72. The bypass pipe 71c has one end connected with the upstream-side pipe 71a via the three-way valve 73 and the other end connected with the downstream-side pipe 71b. The controller 20 controls opening and closing of the three-way valve 73 to adjust the amount of inflow of the cooling medium to the bypass pipe 71c and thereby control the amount of inflow of the cooling medium to the radiator 72.

The radiator 72 is provided on the cooling medium piping 71. The radiator 72 exchanges heat between the cooling medium flowing through the cooling medium piping 71 and the outside air, so as to cool down the cooling medium. The cooling medium circulation pump 75 is provided on the downstream side (cooling medium inlet side of the fuel cell 10) of the connecting position of the bypass pipe 71c in the downstream-side pipe 71b and is actuated in response to a command of the controller 20.

The two cooling medium temperature measurement units 76a and 76b are respectively provided on the upstream-side pipe 71a and the downstream-side pipe 71b and send the respective measurement values to the controller 20. The controller 20 determines the operating temperature of the fuel cell 10 from a difference between the measurement values of the respective cooling medium temperature measurement units 76a and 76b. The controller 20 controls the rotation speed of the cooling medium circulation pump 75 based on the determined operating temperature of the fuel cell 10 and thereby adjusts the operating temperature of the fuel cell 10.

The fuel cell system 100 further includes an ambient temperature sensor 101 and a vehicle speed sensor 102 to obtain vehicle information of the fuel cell vehicle. The ambient temperature sensor 101 detects the temperature outside of the fuel cell vehicle and sends the detection value to the controller 20. The vehicle speed sensor 102 detects the current speed of the fuel cell vehicle and sends the detection value to the controller 20. The controller 20 appropriately uses the information obtained from these sensors for output control of the fuel cell 10.

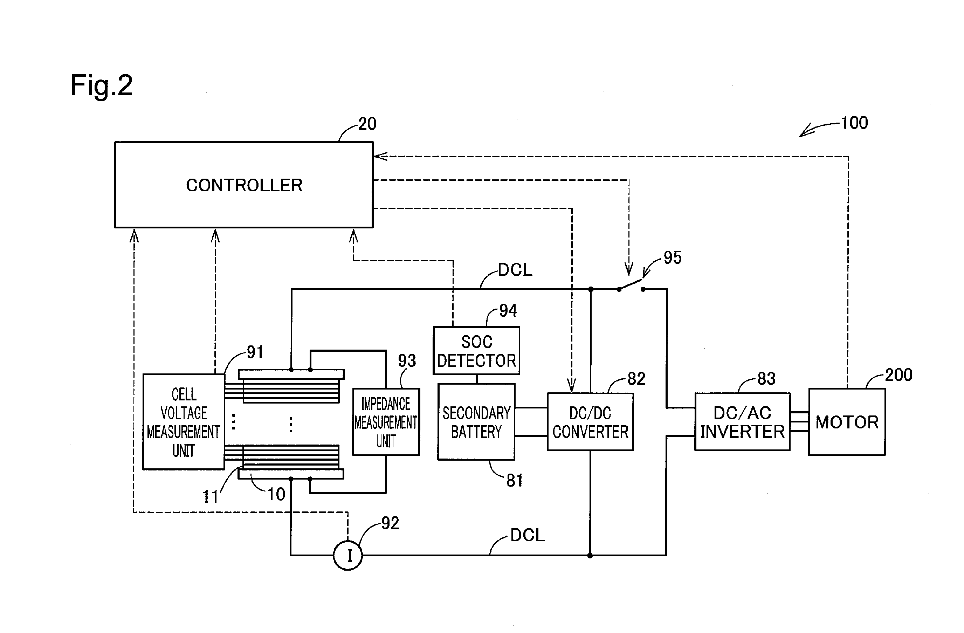

Fig. 2 is a schematic diagram illustrating the electrical configuration of the fuel cell system 100. The fuel cell system 100 includes a secondary battery 81, a DC/DC converter 82 and a DC/AC inverter 83. The fuel cell system 100 also includes a cell voltage measurement unit 91, a current measurement unit 92, an impedance measurement unit 93, an SOC detector 94 and an open-close switch 95.

The fuel cell 10 is connected with the DC/AC inverter 83 via a direct current line DCL, and the DC/AC inverter 83 is connected with a motor 200 as a driving force source of the fuel cell vehicle. The secondary battery 81 is connected to the direct current line DCL via the DC/DC converter 82.

The secondary battery 81 serves as an auxiliary power source of the fuel cell 10. The secondary battery 81 may be, for example, a lithium ion battery. The controller 20 controls the DC/DC converter 82 to control the electric current and the voltage of the fuel cell 10 and charging and discharging of the secondary battery 81, so as to vary and adjust the voltage level of the direct current line DCL.

The SOC detector 94 is connected to the secondary battery 81. The SOC detector 94 detects the SOC (state of charge) as the charging state of the secondary battery 81 and sends the detection value to the controller 20. The SOC of the secondary battery 81 herein denotes the ratio of the remaining charge (amount of accumulated power) of the secondary battery 81 to the charging capacity of the secondary battery 81. The SOC detector 94 measures the temperature, the electric power and the electric current of the secondary battery 81 to detect the SOC of the secondary battery 81.

The controller 20 controls charging and discharging of the secondary battery 81 based on the detection value of the SOC detector 94, such that the SOC of the secondary battery 81 is maintained in a specified range. More specifically, when the SOC of the secondary battery 81 obtained from the SOC detector 94 is lower than a predetermined lower limit value, the controller 20 controls the secondary battery 81 to be charged with electric power output from the fuel cell 10. When the SOC of the secondary battery 81 is higher than a predetermined upper limit value, on the other hand, the controller 20 controls the secondary battery 81 to be discharged.

The DC/AC inverter 83 converts the direct current power obtained from the fuel cell 10 and the secondary battery 81 into alternating current power and supplies the alternating current power to the motor 200. When regenerative electric power is generated by the motor 200, the DC/AC inverter 83 converts the regenerative electric power to direct current power. The regenerative electric power converted to the direct current power is accumulated in the secondary battery 81 via the DC/DC converter 82.

The cell voltage measurement unit 91 is connected with the respective power generation elements 11 of the fuel cell 10 to measure the voltage of each power generation element 11 (cell voltage). The cell voltage measurement unit 91 sends the measurement results to the controller 20. The controller 20 obtains a voltage output from the fuel cell 10, based on the measurement results of the cell voltage measurement unit 91.

The current measurement unit 92 is connected with the direct current line DCL to measure the electric current value output from the fuel cell 10 and sends the measurement value to the controller 20. When there are differences between the observed values and target values (control values) of the cell voltage and the electric current, the controller 20 performs feedback control to correct the control values, in order to reduce the differences.

The impedance measurement unit 93 is connected with the fuel cell 10. The impedance measurement unit 93 measures the impedance of the entire fuel cell 10 by application of alternating current to the fuel cell 10 and sends the measurement result to the controller 20. The controller 20 manages the wet state of the electrolyte membranes of the fuel cell 10, based on the measurement result of the impedance measurement unit 93. The open-close switch 95 is provided on the direct current line DCL and controls the electrical connections between the fuel cell 10 and the motor 200 and between the secondary battery 81 and the motor 200, in response to a command of the controller 20.

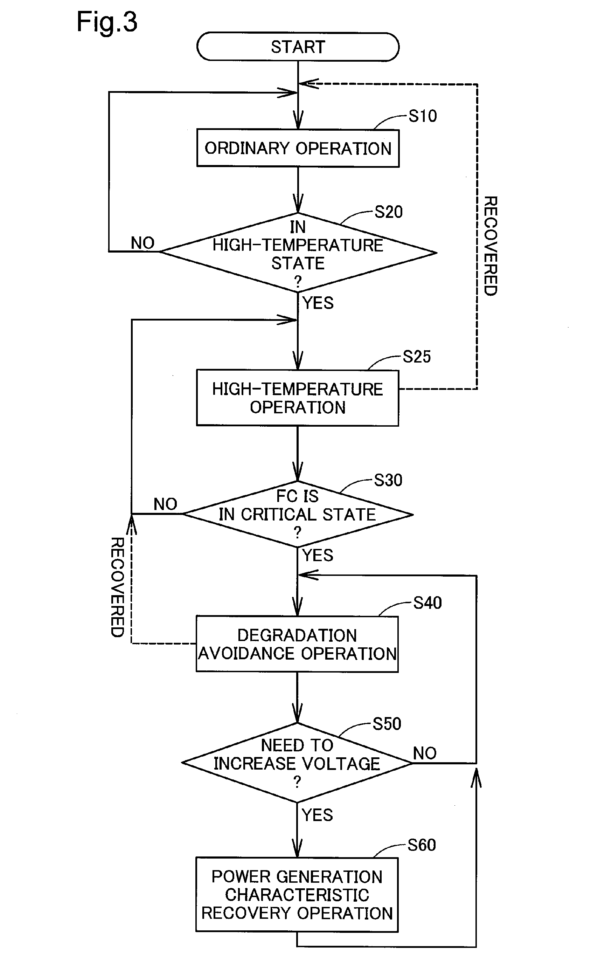

Fig. 3 is a flowchart showing a control procedure of system control by the controller 20 of the fuel cell system 100. When the fuel cell system 100 is activated, the controller 20 starts ordinary operation to control the fuel cell 10 to generate electric power based on the driver's driving request to the fuel cell vehicle (step S10).

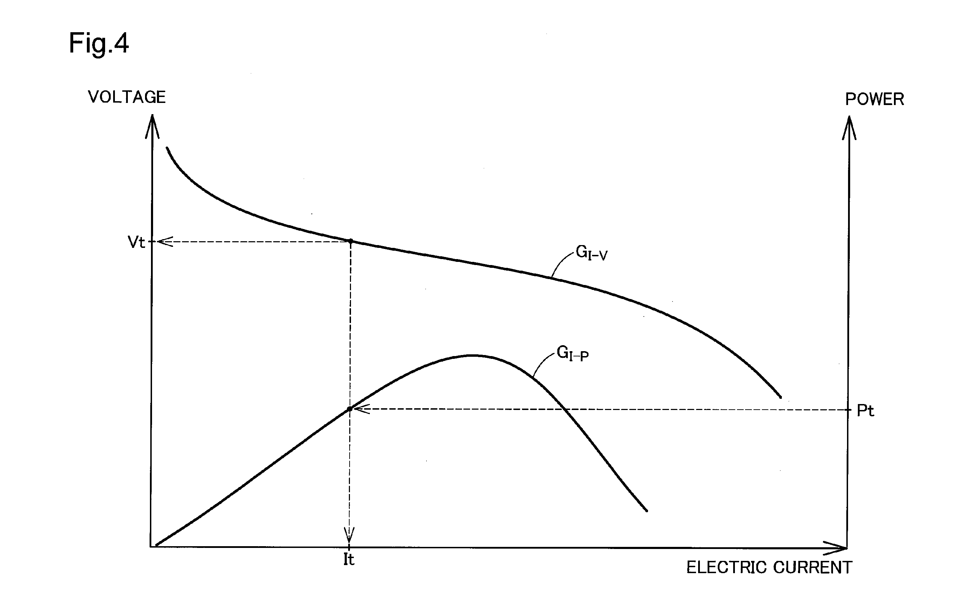

Fig. 4 is a diagram illustrating output control of the fuel cell system 100 during ordinary operation. Fig. 4 shows a graph $G_{I-V}$ representing a current-voltage characteristic (I-V characteristic) of the fuel cell 10 and a graph $G_{I-P}$ representing a current-power characteristic (I-P characteristic) of the fuel cell 10, with the voltage and the power as left and right ordinates and the electric current as abscissa. The power generation characteristics of the fuel cell are generally expressed by the I-V characteristic and the I-P characteristic. The I-V characteristic of the fuel cell is shown as a lateral S-shaped gentle curved graph, in which the voltage decreases with an increase in electric current. The I-P characteristic of the fuel cell is shown as an upward convex curved graph.

The controller 20 stores in advance information indicating the power generation characteristics of the fuel cell 10, such as the I-V characteristic and the I-P characteristic as control information for controlling the fuel cell 10. The I-V characteristic and the I-P characteristic of the fuel cell 10 vary depending on the operating condition of the fuel cell 10, for example, the operating temperature. It is accordingly preferable that the controller 20 has the control information with respect to each operating condition.

The controller 20 obtains a target current It to be output from the fuel cell 10 responding to a requested power Pt, based on the I-P characteristic of the fuel cell 10. The controller 20 also obtains a target voltage Vt of the fuel cell 10 to output the target current It, based on the I-V characteristic of the fuel cell 10. The controller 20 controls the DC/DC converter 82 to set the voltage of the direct current line DCL to the target voltage Vt, so as to control the fuel cell 10 and the secondary battery 81 to output the requested power Pt.

At step S20 (Fig. 3), the controller 20 detects the operating temperature of the fuel cell 10 at a specified timing during ordinary operation and determines whether the fuel cell 10 is in a high-temperature state. In the description hereof, the "high-temperature state" denotes the state in which the operating temperature of the fuel cell 10 is higher than a predetermined reference temperature (for example, about 90°C).

When the fuel cell 10 is not in the high-temperature state, the controller 20 continues the control of the ordinary operation (step S10). When the fuel cell 10 is in the high-temperature state, the controller 20 starts high-temperature operation (step S25). The controller 20 performs control to suppress an increase in operating temperature of the fuel cell 10 and suppress drying of the electrolyte membranes, as the high-temperature operation. More specifically, the controller 20 performs control to increase the supply flow rate of the cooling medium to the fuel cell 10 and control to increase the degree of humidification of the reactive gas. Like during the ordinary operation, the output control of the fuel cell 10 is also performed during high-temperature operation. It is, however, known that the power generation performance of the fuel cell 10 degrades with an increase in operating temperature.

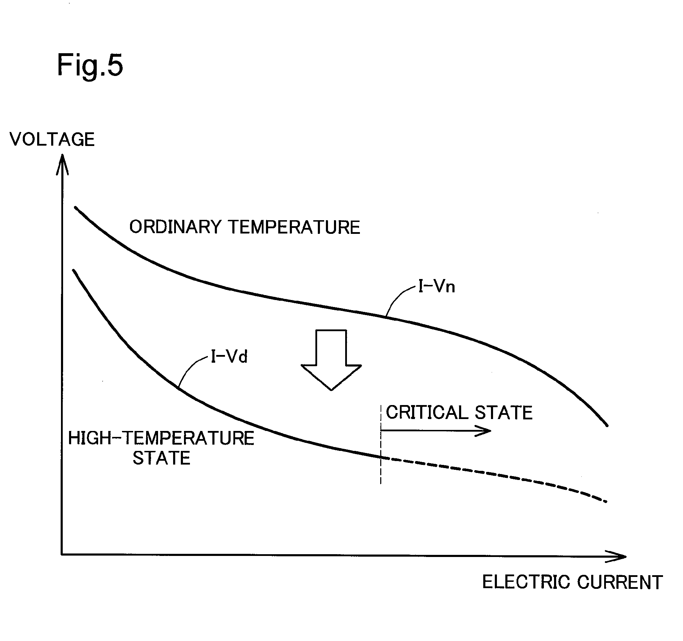

Fig. 5 is a diagram illustrating degradation of power generation performance of the fuel cell with an increase in operating temperature. Fig. 5 shows a graph I-Vn representing an exemplary I-V characteristic of the fuel cell at ordinary operating temperature (for example, about 60°C to 80°C) and a graph I-Vd representing an exemplary I-V characteristic of the fuel cell in the high temperature state (for example, 90°C or higher), with the voltage as ordinate and the electric current as abscissa.

In general, the I-V characteristic of the fuel cell is likely to change in a falling direction of the curved graph representing the I-V characteristic with an increase in operating temperature of the fuel cell. The fuel cell has a decreasing power generation efficiency with a fall of the graph representing the I-V characteristic and falls into the power generation state that is likely to generate heat. In the power generation state that the graph representing the I-V characteristic has a remarkable fall, drying of the electrolyte membranes and oxidation of the catalyst are accelerated. The fuel cell then falls into a critical state (shown by the broken line) having difficulty in increasing the electric current according to the power generation characteristic to increase the electric power. Application of an additional load to the fuel cell in this state may lead to irreversible degradation of the fuel cell.

In the fuel cell system 100 of the embodiment, the controller 20 accordingly determines whether the fuel cell 10 is in the critical state that has remarkable degradation of the power generation performance at a specified timing during the high-temperature operation (step S30 in Fig. 3). In this determination process, for example, the controller 20 may determine that the power generation state of the fuel cell 10 is the critical state, when the cell voltage of the fuel cell 10 against a specified amount of electric current is decreased below a predetermined reference value. As another example, the controller 20 may determine that the power generation state of the fuel cell 10 is the critical state, when the cell resistance obtained based on the impedance of the fuel cell 10 is remarkably increased.

When it is determined that the power generation state of the fuel cell 10 is not the critical state, the controller 20 continues the control of the high-temperature operation (step S25). When the operating temperature of the fuel cell 10 decreases during the high-temperature operation and the fuel cell 10 is recovered from the high-temperature state, the operation control of the fuel cell 10 is returned to ordinary operation (shown by broken line arrow).

When it is determined at step S30 that the power generation state of the fuel cell 10 is the critical state, on the other hand, the controller 20 starts degradation avoidance operation to avoid degradation of the fuel cell 10 (step S40). This degradation avoidance operation restricts the output control of the fuel cell 10. Specifically, the controller 20 limits the output power of the fuel cell 10 to a predetermined limiting value. More specifically, the controller 20 limits the voltage of the fuel cell 10 to a predetermined limiting voltage $V_{lim}$ and limits the electric current of the fuel cell 10 to a predetermined limiting current $I_{lim}$. During this degradation avoidance operation, the secondary battery 81 compensates for a shortage to the requested power.

Even during this degradation avoidance operation, in some cases, there may be a request that needs to further increase the voltage of the fuel cell 10, for example, there may be a need for electric power that exceeds the electric power compensable by the secondary battery 81. There may also be a need to further increase the voltage of the fuel cell 10, in response to an internal request of the fuel cell system.

When detecting a request that needs to increase the voltage of the fuel cell 10 during the degradation avoidance operation (step S50), the fuel cell system 100 of the embodiment does not regard the request as an invalid request but starts power generation characteristic recovery operation (step S60). This power generation characteristic recovery operation repeatedly performs a temporary voltage drop process described below at predetermined cycles and a predetermined number of times, so as to temporarily improve the power generation performance of the fuel cell 10.

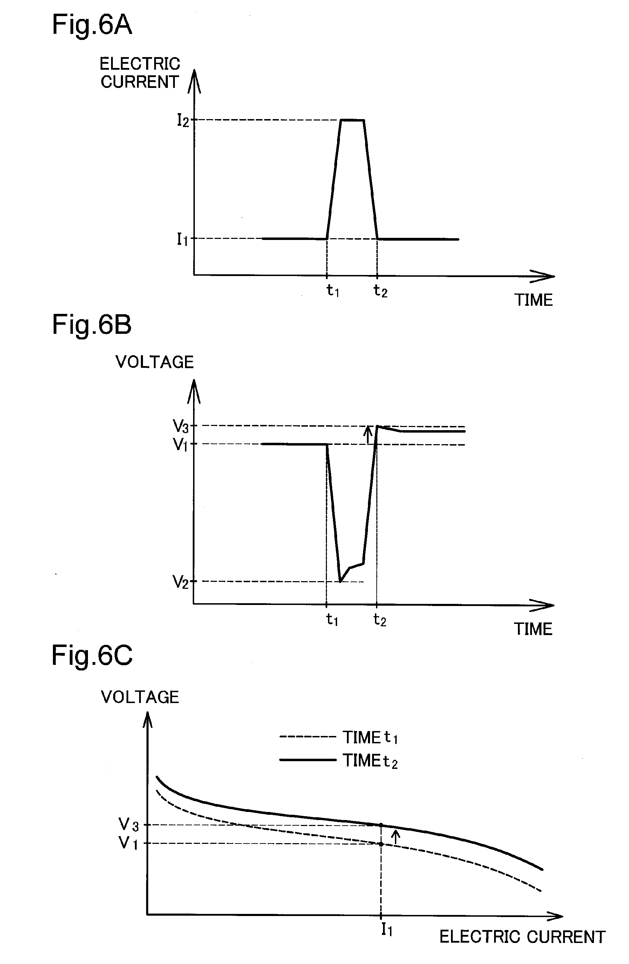

Figs. 6A to 6C are diagrams illustrating temporary improvement of the power generation performance of the fuel cell by the temporary voltage drop process. The graphs of Figs. 6A and 6B are obtained by an experiment. Fig. 6A is a graph showing a time change of the electric current of the fuel cell, and Fig. 6B is a graph showing a time change of the voltage of the fuel cell. The graphs of Figs. 6A and 6B have the common time axis.

The experiment increased the electric current of the fuel cell from $I_1$ to $I_2$, temporarily kept the electric current at $I_2$ and again decreased to $I_1$ in a period between a time $t_1$ and a time $t_2$ (Fig. 6A). The voltage of the fuel cell decreased from $V_1$ to $V_2$ with an increase in electric current. When the electric current was returned to the original current value $I_1$ (time $t_2$), however, the voltage was increased to a higher voltage $V_3$ than the original voltage $V_1$. After that, the voltage was kept higher than the original voltage $V_1$ for some time (Fig. 6B).

Fig. 6C is a diagram explaining the increase in voltage after the temporary voltage drop by the I-V characteristic of the fuel cell. Fig. 6C shows a graph of the broken line representing an I-V characteristic of the fuel cell at the time $t_1$ (before the voltage drop of the fuel cell) and a graph of the solid line representing an I-V characteristic of the fuel cell at the time $t_2$ (after recovery of the voltage of the fuel cell).

The reason of incompatibility between the electric current and the voltage of the fuel cell after the temporary increase in electric current as shown in Figs. 6A and 6B is attributed to a change of the I-V characteristic of the fuel cell in the direction of recovery as shown in Fig. 6C. This change in I-V characteristic is attributed to that the temporary increase in electric current increases the moisture inside the fuel cell to accelerate decrease in dry area of the electrolyte membrane and decrease in oxide layer of the catalyst/ activation of the catalyst. As understood from this explanation, an amount of voltage increase against a certain value of electric current (amount obtained as $V_3$-$V_1$ against electric current $I_1$ in Fig. 6) is construed as a value representing the degree of improvement in power generation performance of the fuel cell.

As described above, the temporary voltage drop process that temporarily decreases the voltage of the fuel cell to temporarily increase the electric current based on the power generation characteristic of the fuel cell (I-V characteristic) recovers the power generation characteristic of the fuel cell and improves the power generation performance of the fuel cell. The improvement in power generation performance by the recovery change of the power generation characteristic is, however, only temporary. The voltage of the fuel cell gradually decreases with elapse of time even when the electric current is kept constant. In order to achieve desired improvement of the power generation performance, it is accordingly preferable to repeatedly perform the temporary voltage drop process.

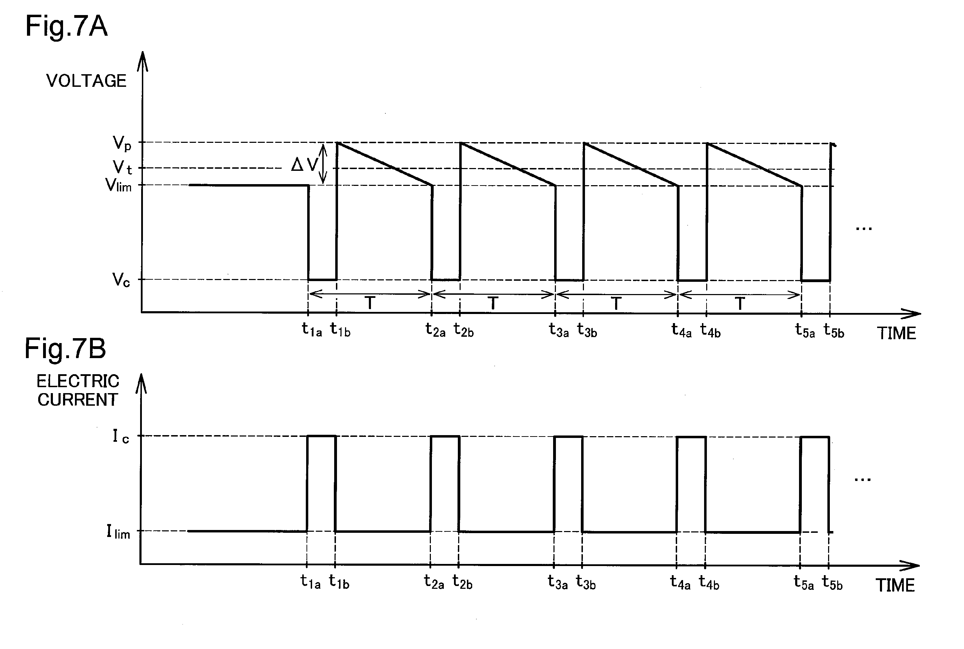

Figs. 7A and 7B are diagrams illustrating output control of the fuel cell 10 in the power generation characteristic recovery operation. Fig. 7A shows a graph representing an exemplary time change of the voltage of the fuel cell 10 before and after execution of the power generation characteristic recovery operation, with the voltage as ordinate and the time as abscissa. Fig. 7B shows a graph representing an exemplary time change of the electric current of the fuel cell 10, with the electric current as ordinate and the time as abscissa, where Figs. 7A and 7B have a common time axis.

It is assumed here that the controller 20 detects a request to increase the voltage of the fuel cell 10 to the target voltage Vt, while the fuel cell 10 outputs the limiting voltage $V_{lim}$ and the limiting current $I_{lim}$ during the degradation avoidance operation (steps S40 and S50 in Fig. 3). The controller 20 performs output control of the fuel cell 10 as described below, as the power generation characteristic recovery operation (step S60).

The controller 20 decreases the voltage of the fuel cell 10 from the limiting voltage $V_{lim}$ to Vc and increases the electric current from $I_{lim}$ to Ic (time $t_{1a}$). The controller 20 keeps the voltage at the decreased voltage Vc for a predetermined time period and increases the voltage to a higher voltage Vp than the original limiting voltage $V_{lim}$ in order to return the electric current to the original limiting current $I_{lim}$ (time $t_{1b}$).

In the description hereinafter, the difference between the increased voltage Vp after the temporary voltage drop process and the original voltage $V_{lim}$ before execution of the temporary voltage drop process, i.e., the amount of voltage increase by the temporary voltage drop process is called "amount of voltage increase $\Delta V$" ($\Delta V = Vp - V_{lim}$). The fuel cell system 100 of the embodiment sets the increased voltage Vp based on the target voltage Vt, sets a target value of the amount of voltage increase $\Delta V$ (target increase amount $\Delta V$) and specifies the processing condition of the temporary voltage drop process to achieve the target increase amount $\Delta V$ as described in detail later.

The "increased voltage Vp" described above corresponds to the "target voltage" in the claims, and the "target increase amount $\Delta V$" corresponds to the "target amount of voltage increase" in the claims.

In a period between the time $t_{1b}$ and a time $t_{2a}$, the controller 20 controls the electric current output from the fuel cell 10 to be kept at $I_{lim}$. As described above, however, the improvement in power generation performance of the fuel cell 10 is only temporary, so that the controller 20 gradually decreases the voltage from Vp at a predetermined rate. After that, the controller 20 repeats the temporary voltage drop process similar to that performed in the period between the time $t_{1a}$ and the time $t_{1b}$ at predetermined cycles T and a predetermined number of times, in order to make the time average voltage of the fuel cell 10 equal to the target value Vt.

The fuel cell system 100 of the embodiment repeatedly performs the temporary voltage drop process to temporarily decrease the voltage as described above during the power generation characteristic recovery operation, so as to further increase the voltage of the fuel cell 10 from the limiting voltage $V_{lim}$. The power generation characteristic recovery process is specifically performed by the following procedure.

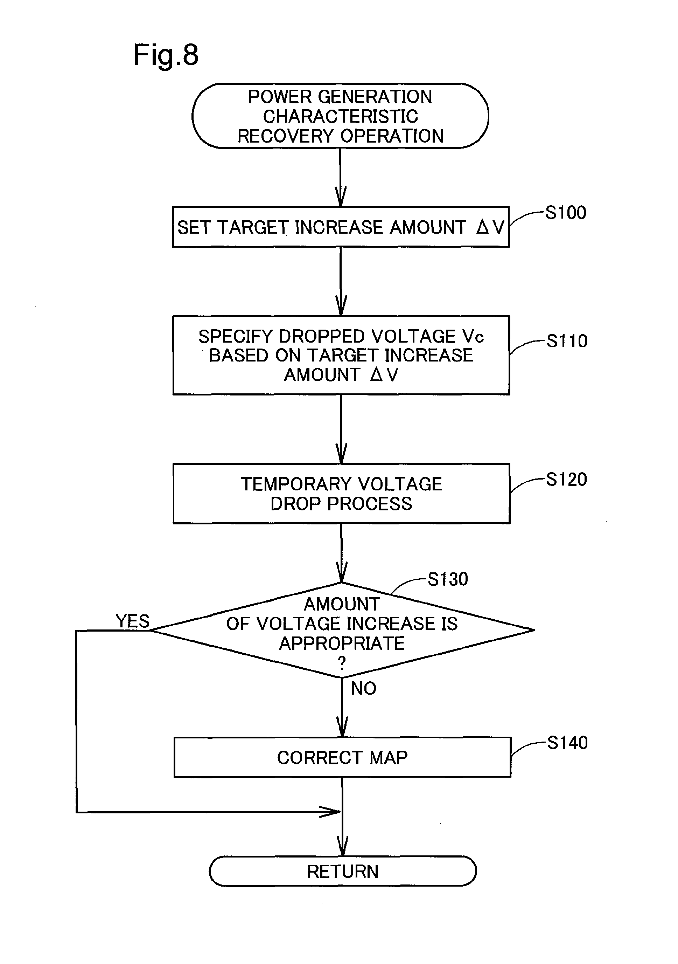

Fig. 8 is a flowchart showing a specific control procedure of the power generation characteristic recovery operation. At step S100, the controller 20 sets an increased voltage Vp after the temporary voltage drop process based on a requested voltage (target voltage Vt) and sets a target increase amount $\Delta V$ as an amount of voltage increase to be increased by the temporary voltage drop process. More specifically, the controller 20 sets the increased voltage Vp and the target increase amount $\Delta V$, based on the target voltage Vt and the predetermined cycle T of repeating the temporary voltage drop process. The controller 20 may refer to a relationship provided in advance to set the increased voltage Vp relative to the target voltage Vt and the target increase amount $\Delta V$.

At step S110, the controller 20 specifies a dropped voltage Vc which is a minimum voltage of the fuel cell 10 (target value of voltage drop) in the temporary voltage drop process, based on the target increase amount ΔV, as the processing condition of the temporary voltage drop process. More specifically, the controller 20 obtains the dropped voltage Vc as described below.

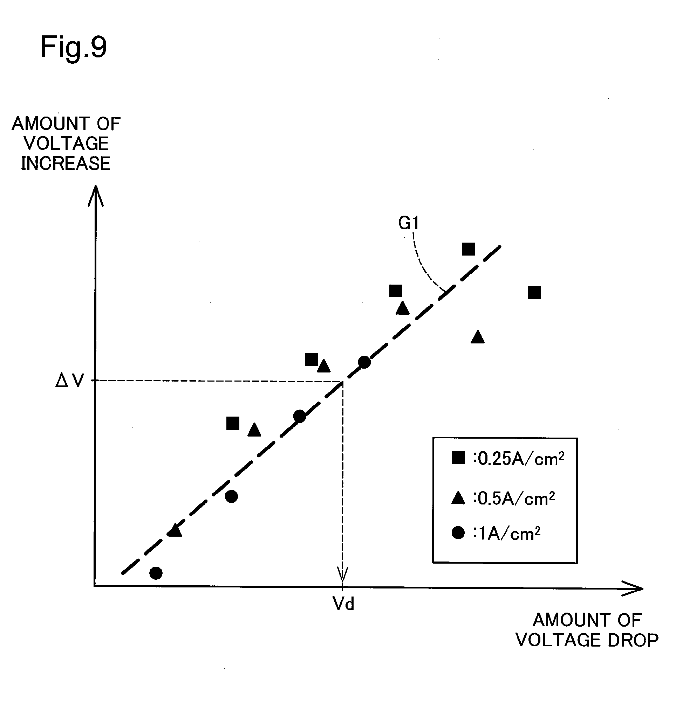

Fig. 9 is a graph obtained by an experiment made by the inventors of the present invention as a graph showing the relationship between an increased amount of voltage (amount of voltage increase) against a specified value of electric current after execution of the temporary voltage drop process and a decreased amount of voltage (amount of voltage drop) in the temporary voltage drop process. The inventors of the present invention performed the temporary voltage drop process with changing the amount of voltage drop during power generation of the fuel cell at different current densities of 0.25 A/cm$^2$, 0.5 A/cm$^2$ and 1 A/cm$^2$ and measured the amounts of voltage increase by recovery to the respective original current densities. A linear graph G1 of the broken line shown in Fig. 9 was obtained by plotting the respective measurement values.

By this experiment, the inventors of the present invention have found that there is a linear relationship between the amount of voltage drop in the temporary voltage drop process and the amount of voltage increase by the temporary voltage drop process, such that the amount of voltage increase increases at a substantially fixed rate with an increase in amount of voltage drop. It has also been found that the linear relationship is substantially constant, irrespective of the value of electric current of the fuel cell.

The controller 20 stores in advance a map representing the relationship between the amount of voltage drop and the amount of voltage increase similar to Fig. 9. At step S110, the controller 20 refers to this map to obtain an amount of voltage drop Vd relative to the target increase amount ΔV and obtains a dropped voltage Vc (Vc= Vi - Vd) as a target value of voltage drop in the temporary voltage drop process from the amount of voltage drop Vd and a present voltage value Vi.

At step S120, the temporary voltage drop process is performed repeatedly at predetermined cycles T and a predetermined number of times to temporarily decrease the voltage of the fuel cell 10 to the dropped voltage Vc specified at step S110 for a specific fixed period. This increases the voltage of the fuel cell 10 from the limiting voltage $V_{lim}$ as described in Fig. 7 and makes the time average voltage of the fuel cell 10 during the time period when the temporary voltage drop process is repeatedly performed equal to the target voltage Vt.

At step S130, the controller 20 determines whether an appropriate amount of voltage increase is obtained by the temporary voltage drop process. More specifically, the controller 20 measures the increased voltage of the fuel cell 10, calculates a difference between the target increase amount ΔV as the target value and an actual amount of voltage increase, and determines whether the difference is in a predetermined allowable range (for example, about ±10%).

When the difference is out of the allowable range, the controller 20 corrects the map described in Fig. 9, in order to reduce the difference (step S140). More specifically, the controller 20 shifts the graph of the map by reflecting the actual amount of voltage increase obtained after execution of the temporary voltage drop process. Alternatively the controller 20 may vary the slope of the graph of the map.

When the appropriate value is obtained as the target increase amount ΔV in the temporary voltage drop process at step S120 or after correction of the map at step S130 is completed, the controller 20 terminates the power generation characteristic recovery operation. The controller 20 then performs the degradation avoidance operation until there is another need to increase the voltage of the fuel cell 10 (step S40). The controller 20 returns the operation control to the high-temperature operation of step S25 when the power generation performance of the fuel cell 10 is recovered from the critical state during the degradation avoidance operation, and returns the operation control to the ordinary operation when the fuel cell 10 is not het in the high-temperature state (flow shown by the broken line arrows).

As described above, even after the fuel cell 10 falls into the high-temperature state to have degradation of the power generation performance to the critical range, the fuel cell system 100 of the embodiment performs the power generation characteristic recovery operation to reach the voltage of the fuel cell 10 to the target voltage. This improves the controllability of the fuel cell 10 in the high temperature state. The power generation characteristic recovery operation specifies the processing condition of the temporary voltage drop process according to the target voltage, thus enabling the voltage of the fuel cell 10 to be adequately controlled. Additionally, the power generation characteristic recovery operation feeds back the actual amount of voltage increase by the temporary voltage drop process to the map for specifying the processing condition. This further improves the controllability of the fuel cell 10.

B. Second Embodiment

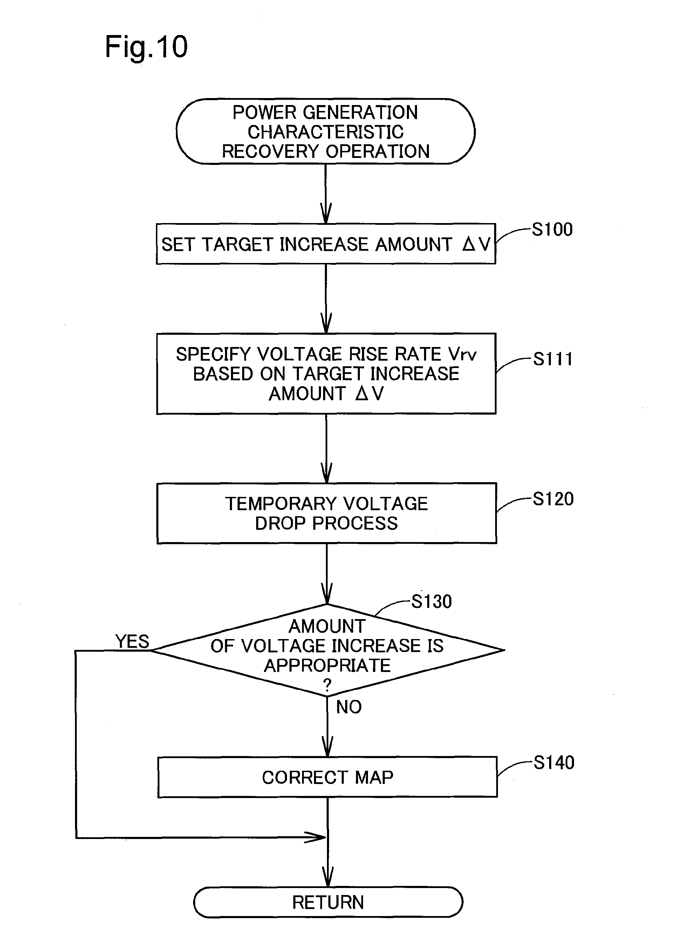

Fig. 10 is a flowchart showing a control procedure of power generation characteristic recovery operation performed by a fuel cell system according to a second embodiment of the invention. Fig. 10 is substantially similar to Fig. 8, except replacement of step S110 with step S111. The configuration of the fuel cell system of the second embodiment is substantially similar to the configuration of the fuel cell system of the first embodiment (Figs. 1 and 2). The procedure of system control by the controller 20 in the fuel cell system of the second embodiment is similar to the procedure described in the first embodiment (Fig. 3).

In the power generation characteristic recovery operation of the second embodiment, after obtaining the target increase amount ΔV at step S110, the controller 20 specifies a voltage rise rate Vrv as a recovery rate of voltage in the temporary voltage drop process, based on the target increase amount ΔV (step S111). The controller 20 uses a relationship between an increase rate of voltage (voltage rise rate) for recovery of voltage in the temporary voltage drop process and an amount of voltage increase described below, in order to obtain the specified value of the voltage rise rate Vrv.

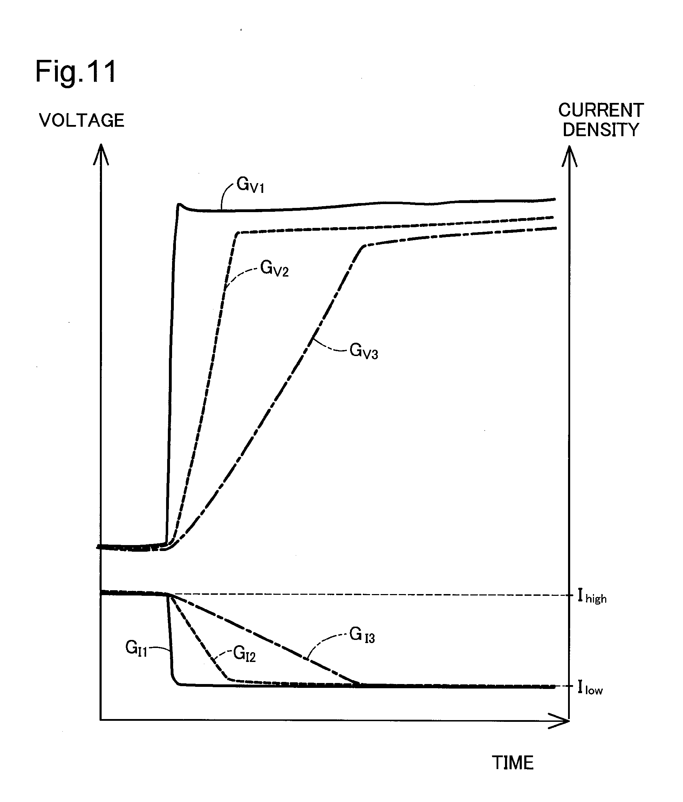

Fig. 11 is graphs obtained by an experiment made by the inventors of the present invention as a graph showing the relationship between a voltage rise rate and an amount of voltage increase when the temporary voltage drop process was performed for the fuel cell. Fig. 11 shows graphs $G_{I1}$ to $G_{I3}$ representing time changes of the current density in the lower part and graphs $G_{V1}$ to $G_{V3}$ representing time changes of the voltage in the upper part, with the cell voltage as left ordinate, the current density as right ordinate and the time as abscissa.

As shown by these graphs, the lower decrease rate of the current density when decreasing from $I_{high}$ to $I_{low}$, i.e., the higher voltage rise rate, leads to the higher voltage value after the change. The inventors of the present invention have accordingly found that the temporary voltage drop process increases the amount of voltage increase with an increase in recovery rate of the voltage. In other words, the inventors of the present invention have found that the temporary voltage drop process increases the degree of improvement in performance of the fuel cell with an increase in voltage rise rate. In the fuel cell system of the second embodiment, the controller 20 uses a map described below to specify the processing condition of the temporary voltage drop process.

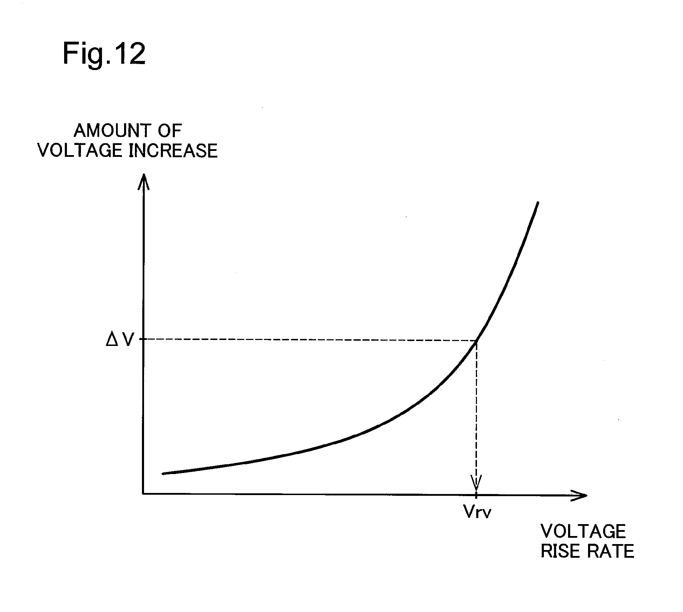

Fig. 12 is a diagram illustrating an exemplary map referred to by the controller 20 to obtain the voltage increase rate Vrv based on the target increase amount ΔV at step S111. Fig. 12 shows the map used at step S111 as a graph with the amount of voltage increase as ordinate and the voltage rise rate as abscissa. This map is set to increase the voltage rise rate with an increase in amount of voltage increase and to decrease a change rate of the voltage rise rate with an increase in amount of voltage increase.

The controller 20 refers to this map to obtain the voltage rise rate Vrv against the target increase amount ΔV (step S111). The controller 20 then performs the temporary voltage drop process to decrease the voltage of the fuel cell 10 to a predetermined dropped voltage Vc, keep the voltage of the fuel cell 10 at the dropped voltage Vc for a predetermined time period and recover the voltage of the fuel cell at the voltage rise rate Vrv (step S120). The fuel cell system 100 of the second embodiment may adjust the execution interval of the temporary voltage drop process (time interval between a voltage increase and a subsequent voltage drop) according to the voltage rise rate Vrv, in order to perform the temporary voltage drop process at the predetermined cycles T.

As described above, the fuel cell system of the second embodiment refers to the relationship obtained in advance and specifies a voltage rise rate as one processing condition of the temporary voltage drop process based on a desired amount of voltage increase, so as to achieve desired recovery of power generation characteristics of the fuel cell 10. This improves the controllability of the fuel cell 10 during high load operation. It may be construed that the fuel cell system of the second embodiment refers to the relationship obtained in advance and specifies a current decrease rate in the temporary voltage drop process, based on a desired amount of voltage increase.

C. Third Embodiment

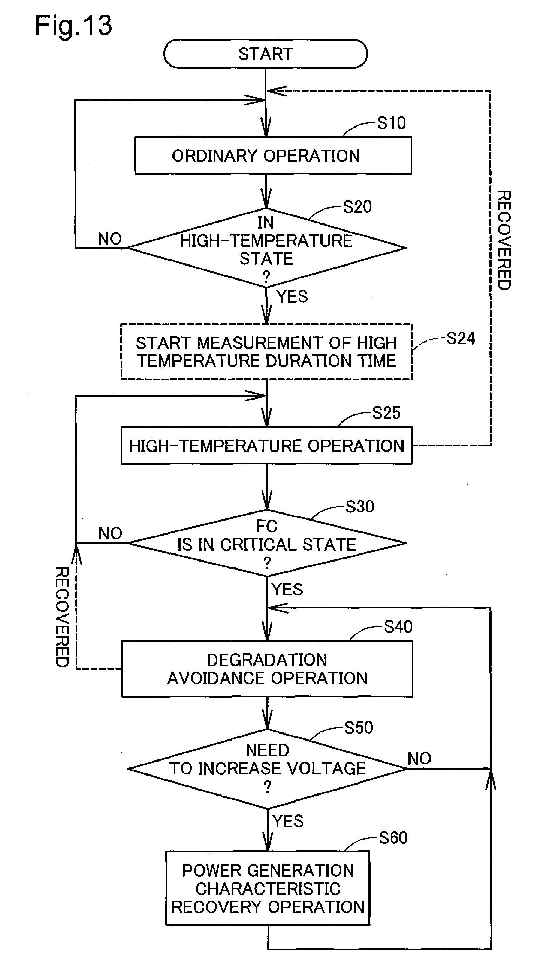

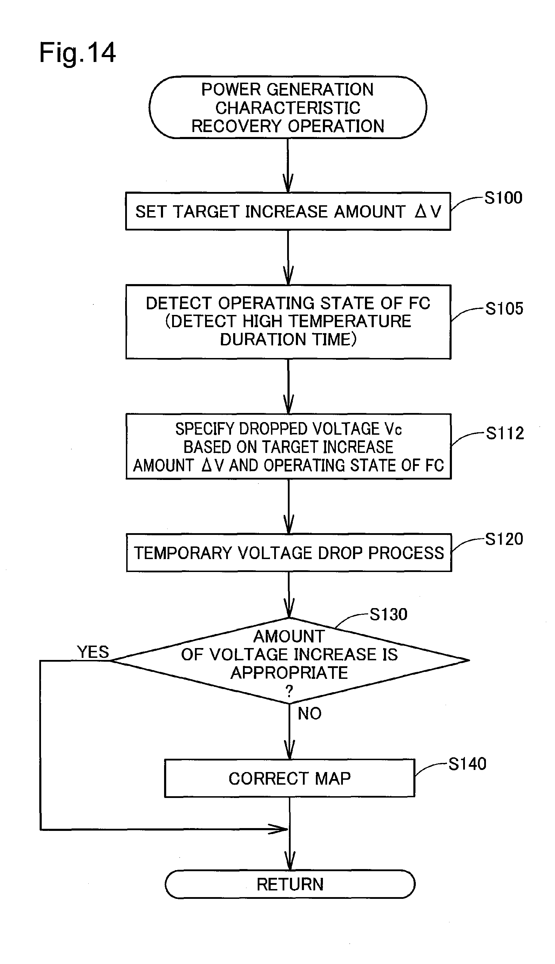

Fig. 13 is a flowchart showing a control procedure of system control performed by the controller 20 in a fuel cell system according to a third embodiment of the invention. Fig. 13 is substantially similar to Fig. 3, except addition of step S24. Fig. 14 is a flowchart showing a control procedure of power generation characteristic recovery operation in the fuel cell system of the third embodiment.

Fig. 14 is substantially similar to Fig. 8, except addition of step S105 and replacement of step S110 with step S112. The configuration of the fuel cell system of the third embodiment is substantially similar to the configuration of the fuel cell system 100 of the first embodiment (Figs. 1 and 2). The fuel cell system of the third embodiment specifies the processing condition of the temporary current drop process, based on the target increase amount ΔV and an accumulated time when the fuel cell 10 is in the high temperature state (accumulated time when the fuel cell 10 is exposed to the high temperature state) as described below more specifically.

When detecting that the fuel cell 10 is in the high temperature state during ordinary operation, the controller 20 starts measurement of the accumulated time when the fuel cell 10 is in the high temperature state (hereinafter referred to as "high temperature duration time") and starts high-temperature operation (steps S24 and S25). This high temperature duration time is used to specify the processing condition of the temporary voltage drop process during power generation characteristic recovery operation. The high temperature measurement time may be reset when a predetermined time has elapsed after the operating temperature of the fuel cell 10 decreases to cause the fuel cell 10 not to be in the high temperature state.

In the power generation characteristic recovery operation (Fig. 14), after obtaining the target increase amount

$\Delta V$ at step S100, the controller 20 obtains the present high temperature duration time as the operating state of the fuel cell 10 immediately before execution of the temporary voltage drop process (step S105). At step S112, the controller 20 refers to a specified relationship and specifies a dropped voltage Vc in the temporary voltage drop process, based on the target increase amount $\Delta V$ and the high temperature duration time.

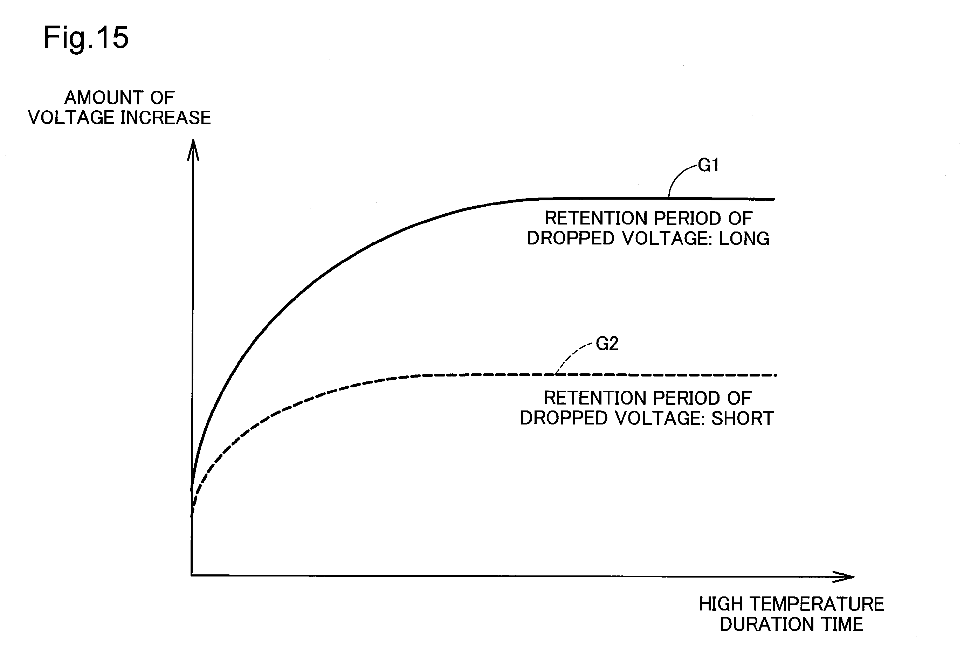

Fig. 15 is graphs obtained by an experiment made by the inventors of the present invention as graphs showing the measurement results when the fuel cell was subject to the temporary voltage drop process under a fixed processing condition with respect to each high temperature duration time, with the amount of voltage increase as ordinate and the high temperature duration time as abscissa. A solid line graph G1 has a longer retention period of the dropped voltage Vc in the temporary voltage drop process than the retention period of a broken line graph G2.

Under the fixed condition of the temporary voltage drop process, the amount of voltage increase by the temporary voltage drop process increases with an increase in high temperature duration time. The increase rate in amount of voltage increase is reduced with an increase in high temperature duration time. The amount of voltage increase is converged to a maximum value when the high temperature duration time exceeds a predetermined value.

The inventors of the present invention have found that this relationship between the high temperature duration time and the amount of voltage increase is obtainable with respect to each dropped voltage as the minimum voltage in the temporary voltage process. The fuel cell system of the third embodiment refers to maps showing the relationship among the high temperature duration time, the amount of voltage increase and the dropped voltage and specifies the dropped voltage Vc as the processing condition of the temporary voltage drop process, based on the high temperature duration time Td and the target increase amount $\Delta V$.

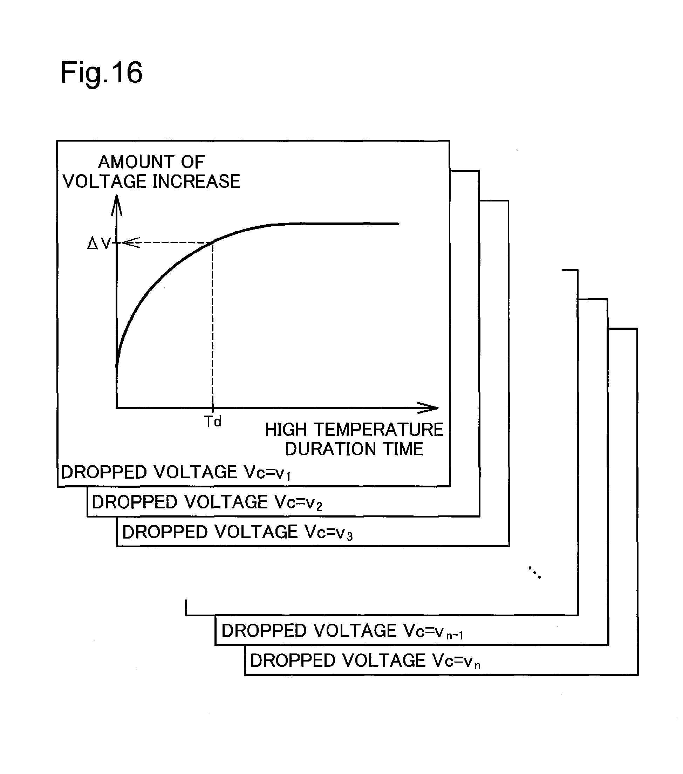

Fig. 16 is a diagram illustrating exemplary maps used to specify the processing condition of the temporary voltage drop process at step S112. In the fuel cell system of the third embodiment, the controller 20 stores in advance maps showing the relationship between the high temperature duration time and the amount of voltage increase with regard to respect dropped voltages Vc (Vc= $v_1$, $v_2$, $v_3$, ..., $v_{n-1}$, $v_n$).

At step S112, the controller 20 selects a map suitable to determine the target increase amount $\Delta V$ against the high temperature duration time Td obtained at step S105 and obtains the dropped voltage Vc corresponding to the selected map. This dropped voltage Vc is specified as the processing condition of the temporary voltage drop process. The maps of Fig. 16 are corrected according to the measured values of the amount of voltage increase of the fuel cell 10 measured after execution of the temporary voltage drop process (step S140).

As described above, the fuel cell system of the third embodiment specifies the adequate processing condition of the temporary voltage drop process, based on the high temperature duration time Td immediately before execution of the temporary voltage drop process in addition to the target increase amount $\Delta V$. This accordingly improves the controllability of the fuel cell 10 during high load operation.

C1. Another Configuration of Third Embodiment

The above third embodiment specifies the dropped cell voltage Vc as the processing condition of the temporary voltage drop process, based on the target increase amount $\Delta V$ and the high temperature duration time Td. As shown in the graphs of Fig. 15, however, the amount of voltage increase after execution of the temporary voltage drop process increases with an increase in retention period of the dropped voltage Vc (low voltage retention period) in the temporary voltage drop process. By utilizing this relationship, the controller 20 may specify the low voltage retention period in the temporary voltage drop process, based on the target increase amount $\Delta V$ and the high temperature duration time Td.

D. Fourth Embodiment

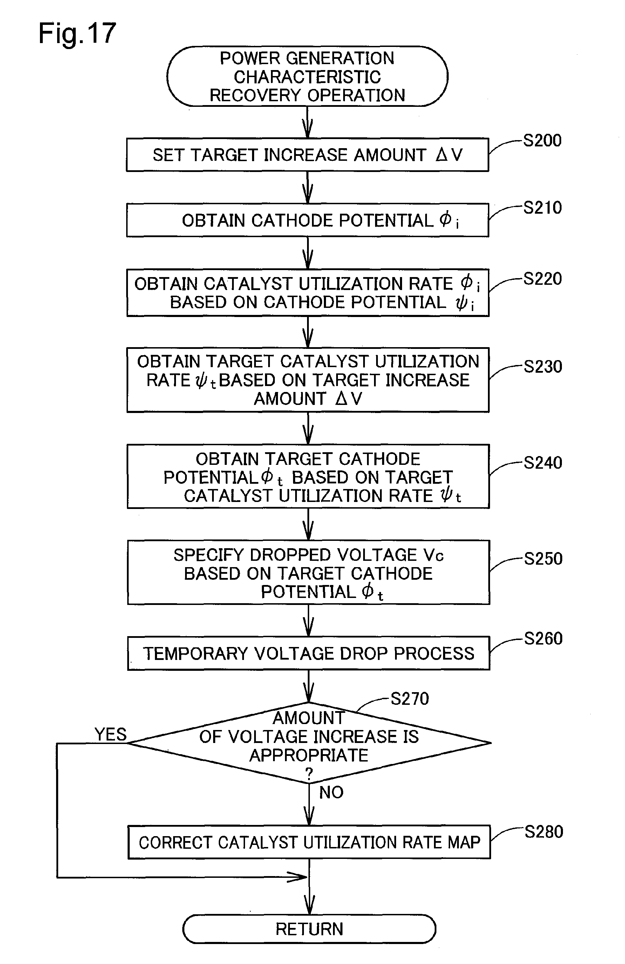

Fig. 17 is a flowchart showing a procedure of power generation characteristic recovery operation performed in a fuel cell system according to a fourth embodiment of the invention. The fuel cell system of the fourth embodiment obtains a present catalyst utilization rate $\varphi_i$ of the cathode catalyst as the operating state of the fuel cell 10 and specifies a processing condition of the temporary voltage drop process based on the catalyst utilization rate $\varphi_i$ and the target increase amount $\Delta V$. The configuration of the fuel cell system of the fourth embodiment is substantially similar to the configuration of the fuel cell system of the first embodiment (Figs. 1 and 2). The procedure of system control by the controller 20 in the fuel cell system of the fourth embodiment is similar to the procedure described in the first embodiment (Fig. 3).

The fuel cell system of the fourth embodiment performs power generation characteristic recovery operation described below, upon determination that the fuel cell 10 falls into the critical state during the high temperature state and upon a request of voltage increase given to the fuel cell 10. Like step S100 described in the first embodiment (Fig. 8), at step S200, the controller 20 sets the target increase amount $\Delta V$ in the temporary voltage drop process, based on the present voltage of the fuel cell 10, the target voltage Vt and the predetermined execution cycle T of the temporary voltage drop process.

At step S210, the controller 20 obtains a present cathode potential $\phi_i$ of the fuel cell 10. The cathode potential $\phi_i$ is obtained by Equation (1) given below using a present cell voltage $V_{ci}$ of the fuel cell 10, a cell resistance R of the fuel cell 10 obtained from the measurement value of the impedance measurement unit 93 and a present current density I of the fuel cell 10:

$$\phi_i = V_{ci} + I \times R \qquad (1)$$

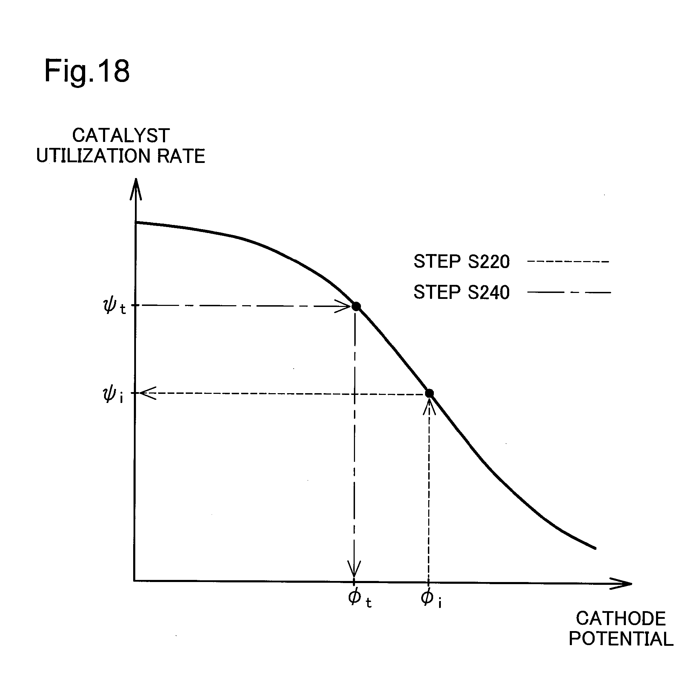

Fig. 18 is a diagram illustrating an exemplary map representing the relationship between the cathode potential and the catalyst utilization rate. The controller 20 may obtain this map by LSV (linear sweep voltammetry) on the start of the fuel cell system or may store in advance in a storage unit of the controller 20. The relationship between the cathode potential and the catalyst utilization rate is generally shown as a lateral S-shaped gentle curved graph, in which the cathode utilization rate decreases with an increase in cathode potential. The cathode potential and the catalyst utilization rate are determinable unequivocally from each other.

At step S220, the controller 20 refers to this map and obtains the present catalyst utilization rate $\varphi_i$ against the present cathode potential $\phi_i$ (shown by the broken line arrows). At step S230, the controller 20 substitutes the present catalyst utilization rate $\varphi_i$, the target increase amount $\Delta V$, the cell resistance R and a present operating temperature T of the fuel cell 10 into Tafel equation-based Equation (2) given below and obtains a target catalyst utilization rate $\varphi_t$ as a target value of catalyst utilization rate after the temporary voltage drop process:

$$\Delta V = (R \times T / \alpha \times F) \times \ln(\varphi_t / \varphi_i) \qquad (2)$$

wherein $\alpha$ represents a transfer coefficient of cathode reaction and is generally a value between 0.5 and 1.0, and F represents Faraday constant.

At step S240, the controller 20 refers to the map described in Fig. 18 again and obtains a target cathode potential $\phi_t$ against the target catalyst utilization rate $\varphi_t$ (shown by the dashed dotted line arrows in Fig. 18). At step S250, the controller 20 substitutes the obtained target cathode potential $\phi_t$, the cell resistance R of the fuel cell 10 and the current density I into Equation (3) given below and obtains a dropped voltage Vc in the temporary voltage drop process:

$$Vc = \phi_t - I \times R \qquad (3)$$

At step S260, the controller 20 repeatedly performs the temporary voltage drop process to maintain the dropped voltage Vc obtained at step S250 for a predetermined time period, at predetermined cycles T and a predetermined number of times. At step S270, the controller 20 measures an actual amount of voltage increase of the fuel cell 10 in the temporary voltage drop process and calculates a difference from the target increase amount $\Delta V$ as the target value. When the difference is out of a predetermined allowable range (for example, about $\pm 10\%$), the controller 20 corrects the map described in Fig. 18 (step S280).

As described above, the fuel cell system of the fourth embodiment specifies the dropped voltage Vc as the processing condition of the temporary voltage drop process, based on the target increase amount $\Delta V$ obtainable from the target voltage and the catalyst utilization rate $\varphi_i$ indicating the operating state of the fuel cell 10 immediately before execution of the temporary voltage drop process. One of the reasons for recovery of the power generation characteristics of the fuel cell 10 by the temporary voltage drop process is that the temporary current increase reduces the oxide layer of the catalyst and improves the catalyst utilization rate. Accordingly, setting the processing condition of the temporary voltage drop process based on the catalyst utilization rate more directly controls the degree of improvement in power generation performance of the fuel cell 10, thus ensuring output control of the fuel cell 10 with high accuracy.

E. Fifth Embodiment

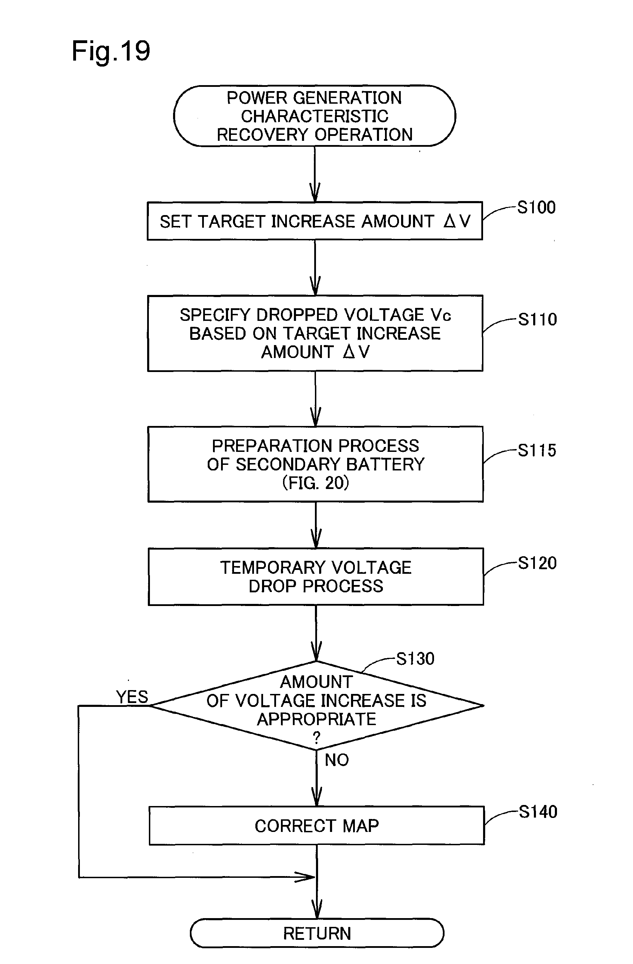

Fig. 19 is a flowchart showing a control procedure of power generation characteristic recovery operation performed in a fuel cell system according to a fourth embodiment. Fig. 19 is substantially similar to Fig. 8, except addition of step S115. The configuration of the fuel cell system of the fifth embodiment is substantially similar to the configuration of the fuel cell system 100 of the first embodiment (Figs. 1 and 2). The procedure of system control by the controller 20 in the fuel cell system of the fourth embodiment is similar to the procedure described in the first embodiment (Fig. 3).

In the course of the temporary voltage drop process, in some cases, the shortage of the output of the fuel cell 10 may be compensated by the output of the secondary battery 81. As described above, however, the SOC of the secondary battery 81 has a predetermined lower limit value. In the state that the SOC of the secondary battery 81 is remarkably low, compensation by the secondary battery 81 may be difficult in the course of the temporary voltage drop process. After setting the processing condition of the temporary voltage drop process at step S110, the fuel cell system of the fifth embodiment accordingly performs a preparation process to ensure compensation by the secondary battery 81 during repeated execution of the temporary voltage drop process (step S115).

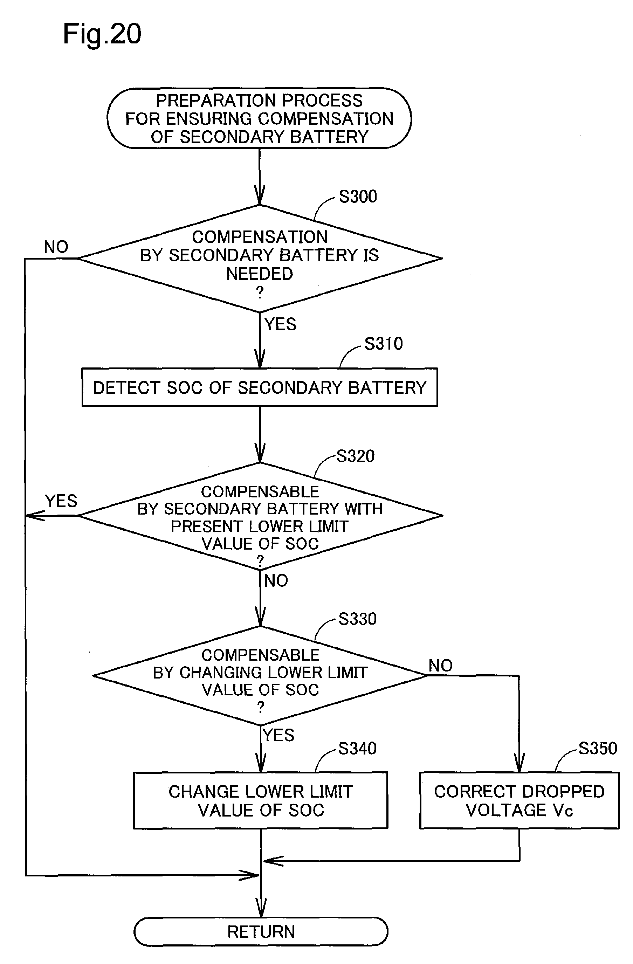

Fig. 20 is a flowchart showing a procedure of the preparation process of the secondary battery 81 at step S115. At step S300, the controller 20 determines whether compensation of output by the secondary battery 81 is needed, based on the processing condition of the temporary voltage drop process. More specifically, the controller 20 compares an electric power presently requested to the fuel cell 10 (requested electric power) with an electric power expected to be output from the fuel cell 10 during repeated execution of the temporary voltage drop process and determines whether there is a shortage of output electric power of the fuel cell 10 during repeated execution of the temporary voltage drop process relative to the requested electric power.

Upon determination that the compensation of output by the secondary battery 81 is needed, the controller 20 detects the present SOC of the secondary battery 81 (step S310). Upon determination that no compensation of output by the secondary battery 81 is needed, on the contrary, the controller 20 returns to the power generation characteristic recovery operation and repeatedly performs the temporary voltage drop process at the predetermined cycles T and a predetermined number of times (step S120 in Fig. 19).

At step S320 (Fig. 20), the controller 20 determines whether a shortage of electric power during execution of the temporary voltage drop process is compensable by the secondary battery 81, based on the present SOC of the secondary battery 81. In other words, it is determined whether the SOC of the secondary battery 81 does not become lower than the lower limit value when the output of the secondary battery 81 compensates for the shortage of electric power. Upon determination that the shortage of electric power is compensable by the secondary battery 81, the controller 20 returns to the power generation characteristic recovery operation and starts execution of the temporary voltage drop process (step S120 in Fig. 19).

As the process flow of and after step S330 (Fig. 20), the controller 20 performs either a process of relieving the output limit of the secondary battery 81 or a process of changing the processing condition of the temporary voltage drop process, in order to ensure execution of the temporary voltage drop process as described below more specifically.

Upon determination that the SOC of the secondary battery 81 becomes lower than the lower limit value when the secondary battery 81 compensates for the shortage of electric power, the controller 20 resets the lower limit value to a smaller value and determines whether the shortage of electric power is compensable by the secondary battery 81 (step S330). In other words, the controller 20 resets the lower limit value of the SOC of the secondary battery 81 to a second lower limit value which is smaller than the initial setting of the lower limit value and determines whether the SOC of the secondary battery 81 becomes lower than the second lower limit value when the secondary battery 81 compensates for the shortage of electric power in the temporary voltage drop process.

Upon determination that the shortage of electric power in the temporary voltage drop process is compensable by changing the lower limit value of the SOC of the secondary battery 81, the controller 20 changes the lower limit value of the SOC of the secondary battery 81 to the second lower limit value (step S340). The lower limit value of the SOC of the secondary battery 81 is set to prevent degradation of the secondary battery 81 due to the insufficient state of charge. The load applied to the secondary battery 81 is reduced by improvement in power generation performance of the fuel cell 10. The fuel cell system of the fourth embodiment dares to temporarily reduce the limitation of the SOC of the secondary battery 81, so as to ensure execution of the temporary voltage drop process.

Upon determination that the shortage of electric power in the temporary voltage drop process is not compensable by changing the lower limit value of the SOC of the secondary battery 81, on the other hand, the controller 20 changes the processing condition of the temporary voltage drop process (step S350). More specifically, the controller 20 makes a correction to increase the value of the dropped voltage Vc, in order to reduce the shortage of electric power during execution of the temporary voltage drop process. After changing the lower limit value of the SOC or after changing the dropped voltage Vc, the controller 20 returns to the power generation characteristic recovery operation and starts execution of the temporary voltage drop process (step S120 in Fig. 19).

As described above, the fuel cell system of the fifth embodiment makes preparations to enable the secondary battery 81 to compensate for the electric power, so as to ensure execution of the temporary voltage drop process. Accordingly, this certainly improves the power generation performance of the fuel cell 10 during high load operation.

F. Modifications

The present invention is not limited to the embodiments or aspects described above but may be implemented by various other aspects within the scope of the invention. Some examples of possible modifications are given below.

F1. Modification 1

In each of the embodiments described above, the fuel cell system is mounted on the fuel cell vehicle. The fuel cell system of each of the embodiments may, however, not be necessarily mounted on the fuel cell vehicle. The fuel cell system may be mounted on another device or system as the power supply source to supply electric power responding to an external request.

F2. Modification 2

In each of the embodiments described above, the controller 20 sets the dropped voltage Vc, the voltage rise rate Vrv or the lower voltage retention period as the processing condition of the temporary voltage drop process, based on the target increase amount ΔV. The target increase amount ΔV is unequivocally related to the increased voltage Vp after execution of the temporary voltage drop process, so that this is construed that the processing condition is set, based on the increased voltage Vp which is the target voltage after execution of the temporary voltage drop process. Accordingly, the controller 20 may use a map specified in advance to represent the relationship between the increased voltage Vp and the processing condition of the temporary voltage drop process, instead of the map described in the above embodiment. The controller 20 may also use a relationship between the target voltage Vt and the processing condition of the temporary voltage drop process, which is specified in advance, and set the processing condition of the temporary voltage drop process based on the target voltage Vt.

The controller 20 may set another processing condition as the processing condition of the temporary voltage drop process. For example, the controller 20 may set the cycle T of repeatedly performing the temporary voltage drop process, based on the increased voltage Vp or the target increase amount ΔV. The controller 20 may set a plurality of processing conditions, based on the increased voltage Vp or the target increase amount ΔV. For example, the controller 20 may set both the dropped voltage Vc and the voltage rise rate Vrv, based on the increased voltage Vp or the target increase amount ΔV.

F3. Modification 3

The third embodiment describes above detects the high temperature duration time Td as the operating state of the fuel cell 10 immediately before execution of the temporary voltage drop process and specifies the processing condition of the temporary voltage drop process, based on the target increase amount ΔV and the high temperature duration time Td. The operating state of the fuel cell 10 detected for determining the processing condition of the temporary voltage drop process may, however be another element. Concrete examples include:

cell voltage
impedance
current density
stoichiometric ratio of reactive gas; and
inlet pressure or outlet pressure (back pressure).

The "stoichiometric ratio" herein means a ratio of an actual supply amount of cathode gas to a theoretically required amount of cathode gas for a certain amount of power generation of the fuel cell (theoretical consumption of cathode gas). The "inlet pressure" means a pressure on the supply side of the reactive gas of the fuel cell 10. The "outlet pressure" means a pressure on the discharge side of the reactive gas of the fuel cell 10.

The processing condition of the temporary voltage drop process may be specified, based on at least one of the increased voltage Vp as the target voltage after execution of the temporary voltage drop process and the above elements of the operating state of the fuel cell 10. The processing condition of the temporary voltage drop process may be specified, for example, based on the combination of the increased voltage Vp, the high temperature duration time Td and the cell voltage or may be specified, based on a combination of more multidimensional elements.

F4. Modification 4

Each of the embodiments described above starts the high-temperature operation (step S25) after detecting the high temperature state of the fuel cell 10 and starts the power generation characteristic recovery operation (step S60) during execution of the degradation avoidance operation of the fuel cell 10 (step S40). Detection of the high temperature state of the fuel cell 10 may, however, be omitted, and the high-temperature operation and the degradation avoidance operation may also be omitted. The controller 20 may perform the power generation characteristic recovery operation, for example, upon detection of drying of the electrolyte membranes of the fuel cell 10 or degradation of the power generation performance.

F5. Modification 5

In each of the embodiments described above, in order to specify the processing condition of the temporary voltage drop process, the controller 20 uses the map representing the relationship between the target increase amount $\Delta V$ and the processing condition of the temporary voltage drop process or the map representing the relationship among the target increase amount $\Delta V$, the operating state of he fuel cell 10 and the processing condition of the temporary voltage drop process. The controller 20 may, however, not necessarily use these maps but may use a predetermined relationship such as mathematical expressions or functions and set the processing condition of the temporary voltage drop process based on the target increase amount $\Delta V$ or the operating state of the fuel cell 10. The controller 20 may not necessarily use the relationship expressed by any of these maps and mathematical expressions. The controller 20 may set the processing condition of the temporary voltage drop process, based on at least the increased voltage Vp which is the target voltage after execution of the temporary voltage drop process (including a value unequivocally determinable from the increased voltage Vp).

F6. Modification 6

Each of the embodiments described above controls the electric current after execution of the temporary voltage drop process to be equal to the electric current immediately before the start of voltage drop. The electric current after execution of the temporary voltage drop process may alternatively be controlled to be different from the electric current immediately before the start of voltage drop.

F7. Modification 7

In the fifth embodiment described above, the controller 20 reduces the lower limit value of the SOC of the secondary battery 81 at step S340. The controller 20 may alternatively cancel the limitation of the SOC of the secondary battery 81 at step S340.

F8. Modification 8

Each of the embodiments described above corrects the map based on the observed value of the voltage of the fuel cell 10 and the target increase amount $\Delta V$, after execution of the temporary voltage drop process. The map correction process may, however, be omitted.

Reference Signs List

| | |
|---|---|
| 10 | Fuel cell |
| 11 | Power generation element |
| 20 | Controller |
| 30 | Cathode gas supply structure |
| 31 | Cathode gas piping |
| 32 | Air compressor |
| 33 | Air flow meter |
| 34 | On-off valve |
| 35 | Humidifier |
| 40 | Cathode gas discharge structure |
| 41 | Cathode off-gas piping |
| 43 | Pressure regulator |
| 44 | Pressure measurement unit |
| 50 | Anode gas supply structure |
| 51 | Anode gas piping |
| 52 | Hydrogen tank |
| 53 | On-off valve |
| 54 | Regulator |
| 55 | Hydrogen supply device |

| 56 | Pressure measurement unit |
| 60 | Anode gas circulation and discharge structure |
| 61 | Anode off-gas piping |
| 62 | Gas liquid separator |
| 63 | Anode gas circulation piping |
| 64 | Hydrogen circulation pump |
| 65 | Anode water discharge piping |
| 66 | Drainage valve |
| 67 | Pressure measurement unit |
| 70 | Cooling medium supply structure |
| 71a | Upstream-side pipe |
| 71b | Downstream-side pipe |
| 71c | Bypass pipe |
| 72 | Radiator |
| 73 | Three-way valve |
| 75 | Cooling medium circulation pump |
| 76a, 76b | Cooling medium temperature measurement units |
| 81 | Secondary battery |
| 82 | DC/DC converter |
| 83 | DC/AC inverter |
| 91 | Cell voltage measurement unit |
| 92 | Current measurement unit |
| 93 | Impedance measurement unit |
| 94 | SOC detector |
| 95 | Open-close switch |
| 100 | Fuel cell system |
| 101 | Ambient temperature sensor |
| 102 | Vehicle speed sensor |
| 200 | Motor |
| DCL | Direct current line |

**Claims**

1. A fuel cell system, comprising:

   a fuel cell; and
   a controller that controls a voltage of the fuel cell, wherein
   the controller sets a processing condition to change a power generation characteristic of the fuel cell expressed as a relationship between electric current and voltage, based on a target voltage which is a target value of voltage relative to a predetermined electric current of the fuel cell, and
   the controller performs a temporary voltage drop process under the processing condition, wherein the temporary voltage drop process temporarily drops the voltage of the fuel cell based on the power generation characteristic of the fuel cell, so as to cause a temporary increase in electric current of the fuel cell and change the power generation characteristic of the fuel cell.

2. The fuel cell system according to claim 1, wherein
   the controller obtains in advance a relationship between an amount of voltage increase, which is an increased amount of the voltage relative to the predetermined electric current of the fuel cell by a change of the power generation characteristic when the temporary voltage drop process is performed, and the processing condition of the temporary voltage drop process, and
   the controller uses the relationship and sets the processing condition, based on a target voltage increase amount, which is a difference between a present voltage relative to the predetermined electric current and the target voltage.

3. The fuel cell system according to claim 2, wherein
   the processing condition is at least one of:

   a minimum voltage in the temporary voltage drop process;

a retention period when the minimum voltage is maintained in the temporary voltage drop process; and
a voltage rise rate for recovery of voltage in the temporary voltage drop process.

4. The fuel cell system according to either claim 2 or claim 3, further comprising:

an operating state detector that detects an operating state of the fuel cell immediately before execution of the temporary voltage drop process, wherein
the controller obtains in advance a relationship among the amount of voltage increase, which is the increased amount of the voltage relative to the predetermined electric current of the fuel cell by the change of the power generation characteristic when the temporary voltage drop process is performed, the operating state of the fuel cell and the processing condition of the temporary voltage drop process, and
the controller uses the relationship and sets the processing condition, based on the operating state of the fuel cell and the target voltage.

5. The fuel cell system according to claim 4, wherein
the operating state of the fuel cell immediately before execution of the temporary voltage drop process is at least one of:

an accumulated time of a period when the fuel cell is in a high temperature state having higher temperature than a predetermined temperature; and
a catalyst utilization rate indicating a state of a catalyst supported on an electrode of the fuel cell.

6. The fuel cell system according to any one of claims 2 to 5, further comprising:

a voltage measurement unit that measures the voltage of the fuel cell, wherein
the controller corrects the relationship, in order to reduce a difference between an observed value of voltage of the fuel cell after execution of the temporary voltage drop process and the target voltage.

7. The fuel cell system according to any one of claims 1 to 6, further comprising:

a secondary battery that is controlled by the controller to be charged and discharged and assists an output electric power of the fuel cell in the temporary voltage drop process, wherein
the controller specifies in advance a lower limit value of a state of charge of the secondary battery, which is a threshold value to limit discharging of the secondary battery, and manages the state of charge of the secondary battery not to make the state of charge of the secondary battery lower than the lower limit value, and
the controller reduces the lower limit value during execution of the temporary voltage drop process, so as to relieve a condition of limiting discharging of the secondary battery.

8. A control method of a fuel cell system, comprising:

(a) a computer setting a processing condition to change a power generation characteristic of a fuel cell expressed as a relationship between electric current and voltage, based on a target voltage which is a target value of voltage relative to a predetermined electric current of the fuel cell, and
(b) the computer performing a temporary voltage drop process under the processing condition set based on the target voltage, wherein the temporary voltage drop process temporarily drops a voltage of the fuel cell based on the power generation characteristic of the fuel cell, so as to cause a temporary increase in electric current of the fuel cell and change the power generation characteristic of the fuel cell.

# Fig.1

OUTPUT REQUEST

CONTROLLER — 20

100

AMBIENT TEMPERATURE SENSOR — 101

VEHICLE SPEED SENSOR — 102

30

OUTSIDE AIR

33 · 32 · 35 · 31 · 34

HUMIDIFIER

41

40 · 43 · 44

FUEL CELL

11 · 10

70 · 71 · 72 · 71b · 71a · 71c · 75 · 73 · 76a · 76b

56 · 51 · 54 · 53 · 52

HYDROGEN TANK

50 · 55 · 64 · 67 · 63 · 62 · 60

GAS LIQUID SEPARATOR

61 · 66 · 65

EP 2 787 566 A1

EP 2 787 566 A1

Fig.2

21

EP 2 787 566 A1

# Fig.3

```
        ┌──────────────────┐
        │      START       │
        └──────────────────┘
                 │
                 ▼                    S10
        ┌──────────────────┐
        │ ORDINARY OPERATION│
        └──────────────────┘
                 │
                 ▼           S20
         ╱───────────────╲
   NO   ╱       IN         ╲
◄──────  HIGH-TEMPERATURE
         ╲     STATE       ╱
          ╲      ?        ╱
           ╲─────────────╱
                 │ YES                    RECOVERED
                 ▼            S25
        ┌──────────────────┐
        │ HIGH-TEMPERATURE │─ ─ ─ ─ ─ ─
        │    OPERATION     │
        └──────────────────┘
                 │
                 ▼           S30
         ╱───────────────╲
   NO   ╱     FC IS        ╲
◄──────  IN CRITICAL STATE
         ╲      ?         ╱
           ╲─────────────╱
                 │ YES
   RECOVERED     ▼            S40
        ┌──────────────────┐
     ─ ─│   DEGRADATION    │
        │AVOIDANCE OPERATION│
        └──────────────────┘
                 │
                 ▼           S50
         ╱───────────────╲
        ╱    NEED TO       ╲   NO
         INCREASE VOLTAGE  ─────
         ╲      ?         ╱
           ╲─────────────╱
                 │ YES
                 ▼            S60
        ┌──────────────────┐
        │ POWER GENERATION │
        │  CHARACTERISTIC  │
        │ RECOVERY OPERATION│
        └──────────────────┘
```

Fig.4

# Fig.5

VOLTAGE

ORDINARY TEMPERATURE

I-Vn

I-Vd

HIGH-TEMPERATURE
STATE

CRITICAL STATE

ELECTRIC CURRENT

## Fig.6A

## Fig.6B

## Fig.6C

## Fig.7A

VOLTAGE

$V_p$
$V_t$
$V_{lim}$

$\Delta V$

$V_c$

$T$ $T$ $T$ $T$

$t_{1a}$ $t_{1b}$    $t_{2a}$ $t_{2b}$    $t_{3a}$ $t_{3b}$    $t_{4a}$ $t_{4b}$    $t_{5a}$ $t_{5b}$    TIME

...

## Fig.7B

ELECTRIC
CURRENT

$I_c$

$I_{lim}$

$t_{1a}$ $t_{1b}$    $t_{2a}$ $t_{2b}$    $t_{3a}$ $t_{3b}$    $t_{4a}$ $t_{4b}$    $t_{5a}$ $t_{5b}$    TIME

...

EP 2 787 566 A1

# Fig.8

POWER GENERATION
CHARACTERISTIC
RECOVERY OPERATION

SET TARGET INCREASE AMOUNT $\Delta V$ ── S100

SPECIFY DROPPED VOLTAGE $V_c$
BASED ON TARGET INCREASE
AMOUNT $\Delta V$ ── S110

TEMPORARY VOLTAGE
DROP PROCESS ── S120

── S130
AMOUNT
OF VOLTAGE INCREASE IS
APPROPRIATE
?

YES

NO

CORRECT MAP ── S140

RETURN

EP 2 787 566 A1

Fig.9

AMOUNT OF
VOLTAGE
INCREASE

G1

ΔV

Vd

■ :0.25A/cm²

▲ :0.5A/cm²

● :1A/cm²

AMOUNT OF
VOLTAGE DROP

28

# Fig.10

```
        ┌─────────────────────────┐
        │   POWER GENERATION      │
        │    CHARACTERISTIC       │
        │  RECOVERY OPERATION     │
        └─────────────────────────┘
                    │
                    ▼
        ┌─────────────────────────┐  ─S100
        │ SET TARGET INCREASE AMOUNT ΔV │
        └─────────────────────────┘
                    │
                    ▼
        ┌─────────────────────────┐  ─S111
        │  SPECIFY VOLTAGE RISE RATE Vrv │
        │  BASED ON TARGET INCREASE │
        │        AMOUNT ΔV        │
        └─────────────────────────┘
                    │
                    ▼
        ┌─────────────────────────┐  ─S120
        │   TEMPORARY VOLTAGE     │
        │     DROP PROCESS        │
        └─────────────────────────┘
                    │
                    ▼
              ╱─────────────╲  ─S130
    YES     ╱   AMOUNT        ╲
   ◀───────◀ OF VOLTAGE INCREASE IS ▶
            ╲   APPROPRIATE   ╱
              ╲      ?      ╱
                ╲─────────╱
                    │ NO
                    ▼
        ┌─────────────────────────┐  ─S140
        │      CORRECT MAP        │
        └─────────────────────────┘
                    │
                    ▼
        ┌─────────────────────────┐
        │        RETURN           │
        └─────────────────────────┘
```

# Fig.11

VOLTAGE

CURRENT
DENSITY

$G_{V1}$

$G_{V2}$

$G_{V3}$

$I_{high}$

$G_{I1}$          $G_{I2}$          $G_{I3}$

$I_{low}$

TIME

# Fig.12

AMOUNT OF
VOLTAGE INCREASE

$\Delta V$

$Vrv$

VOLTAGE
RISE RATE

EP 2 787 566 A1

# Fig.13

START

S10 — ORDINARY OPERATION

S20 — IN HIGH-TEMPERATURE STATE ?
NO
YES

S24 — START MEASUREMENT OF HIGH TEMPERATURE DURATION TIME

S25 — HIGH-TEMPERATURE OPERATION
RECOVERED

S30 — FC IS IN CRITICAL STATE ?
NO
YES
RECOVERED

S40 — DEGRADATION AVOIDANCE OPERATION

S50 — NEED TO INCREASE VOLTAGE ?
NO
YES

S60 — POWER GENERATION CHARACTERISTIC RECOVERY OPERATION

# Fig.14

POWER GENERATION
CHARACTERISTIC
RECOVERY OPERATION

SET TARGET INCREASE AMOUNT $\Delta V$ —S100

DETECT OPERATING STATE OF FC
(DETECT HIGH TEMPERATURE
DURATION TIME) —S105

SPECIFY DROPPED VOLTAGE $V_c$
BASED ON TARGET INCREASE
AMOUNT $\Delta V$ AND OPERATING STATE OF FC —S112

TEMPORARY VOLTAGE DROP PROCESS —S120

S130
AMOUNT
OF VOLTAGE INCREASE IS
APPROPRIATE
?

YES

NO

CORRECT MAP —S140

RETURN

33

# Fig.15

AMOUNT OF
VOLTAGE INCREASE

G1

RETENTION PERIOD OF
DROPPED VOLTAGE: LONG

G2

RETENTION PERIOD OF
DROPPED VOLTAGE: SHORT

HIGH TEMPERATURE
DURATION TIME

# Fig.16

AMOUNT OF
VOLTAGE INCREASE

$\Delta V$

Td HIGH TEMPERATURE
DURATION TIME

DROPPED VOLTAGE $V_c = v_1$

DROPPED VOLTAGE $V_c = v_2$

DROPPED VOLTAGE $V_c = v_3$

DROPPED VOLTAGE $V_c = v_{n-1}$

DROPPED VOLTAGE $V_c = v_n$

# Fig.17

$$\text{POWER GENERATION CHARACTERISTIC RECOVERY OPERATION}$$

SET TARGET INCREASE AMOUNT $\Delta V$ — S200

OBTAIN CATHODE POTENTIAL $\phi_i$ — S210

OBTAIN CATALYST UTILIZATION RATE $\phi_i$ BASED ON CATHODE POTENTIAL $\psi_i$ — S220

OBTAIN TARGET CATALYST UTILIZATION RATE $\psi_t$ BASED ON TARGET INCREASE AMOUNT $\Delta V$ — S230

OBTAIN TARGET CATHODE POTENTIAL $\phi_t$ BASED ON TARGET CATALYST UTILIZATION RATE $\psi_t$ — S240

SPECIFY DROPPED VOLTAGE Vc BASED ON TARGET CATHODE POTENTIAL $\phi_t$ — S250

TEMPORARY VOLTAGE DROP PROCESS — S260

AMOUNT OF VOLTAGE INCREASE IS APPROPRIATE ? — S270

YES

NO

CORRECT CATALYST UTILIZATION RATE MAP — S280

RETURN

Fig.18

# Fig.19

```
     ┌──────────────────────────┐
     │   POWER GENERATION       │
     │   CHARACTERISTIC         │
     │   RECOVERY OPERATION     │
     └──────────────────────────┘
                 │
                 ▼
     ┌──────────────────────────────┐
     │ SET TARGET INCREASE AMOUNT ΔV │ ── S100
     └──────────────────────────────┘
                 │
                 ▼
     ┌──────────────────────────────┐
     │ SPECIFY DROPPED VOLTAGE Vc   │
     │ BASED ON TARGET INCREASE     │ ── S110
     │ AMOUNT ΔV                    │
     └──────────────────────────────┘
                 │
                 ▼
     ┌──────────────────────────────┐
     │ PREPARATION PROCESS          │
     │ OF SECONDARY BATTERY         │ ── S115
     │ (FIG. 20)                    │
     └──────────────────────────────┘
                 │
                 ▼
     ┌──────────────────────────────┐
     │ TEMPORARY VOLTAGE            │ ── S120
     │ DROP PROCESS                 │
     └──────────────────────────────┘
                 │
                 ▼
              ╱─────────╲  ── S130
        YES  ╱  AMOUNT   ╲
      ┌─────< OF VOLTAGE INCREASE IS >
      │      ╲ APPROPRIATE ╱
      │       ╲    ?     ╱
      │        ╲───────╱
      │            │ NO
      │            ▼
      │   ┌──────────────────┐
      │   │   CORRECT MAP    │ ── S140
      │   └──────────────────┘
      │            │
      └────────────┤
                   ▼
            ┌──────────────┐
            │   RETURN     │
            └──────────────┘
```

EP 2 787 566 A1

## Fig.20

```
        ┌─────────────────────────────┐
        │   PREPARATION PROCESS       │
        │ FOR ENSURING COMPENSATION   │
        │   OF SECONDARY BATTERY      │
        └─────────────────────────────┘
                     │
                     ▼           S300
          ◇ COMPENSATION            NO
            BY SECONDARY BATTERY IS ──────┐
            NEEDED ?                       │
                 │ YES                     │
                 ▼          S310           │
        ┌─────────────────────────┐       │
        │ DETECT SOC OF SECONDARY │       │
        │        BATTERY          │       │
        └─────────────────────────┘       │
                 │                          │
                 ▼          S320    YES     │
          ◇ COMPENSABLE            ─────────┤
            BY SECONDARY BATTERY WITH       │
            PRESENT LOWER LIMIT             │
            VALUE OF SOC ?                  │
                 │ NO                       │
                 ▼          S330            │
          ◇ COMPENSABLE            NO       │
            BY CHANGING LOWER LIMIT ────┐   │
            VALUE OF SOC ?              │   │
                 │ YES                  │   │
                 ▼   S340               ▼ S350
        ┌──────────────────┐  ┌──────────────────┐
        │ CHANGE LOWER LIMIT│  │ CORRECT DROPPED  │
        │  VALUE OF SOC     │  │   VOLTAGE Vc     │
        └──────────────────┘  └──────────────────┘
                 │                    │
                 ▼◄───────────────────┘
        ┌─────────────┐
        │   RETURN    │
        └─────────────┘
```

39

## INTERNATIONAL SEARCH REPORT

| International application No. |
| --- |
| PCT/JP2012/007266 |

A. CLASSIFICATION OF SUBJECT MATTER
*H01M8/04*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/04, H01M8/10

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-187883 A (Toshiba Fuel Cell Power Systems Corp., Toshiba Corp.), 20 August 2009 (20.08.2009), paragraphs [0027] to [0037]; fig. 5, 6 (Family: none) | 1,8<br>7 |
| Y | JP 2010-27328 A (Toyota Motor Corp.), 04 February 2010 (04.02.2010), paragraphs [0028] to [0033]; fig. 1 to 3 (Family: none) | 7 |
| A | JP 2009-170409 A (Commissariat a l'Energie Atomique), 30 July 2009 (30.07.2009), entire text<br>& US 2009/0155643 A1 & EP 2073297 A1<br>& DE 602008002209 D & FR 2925229 A | 1-8 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 February, 2013 (05.02.13) | 19 February, 2013 (19.02.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

EP 2 787 566 A1

**INTERNATIONAL SEARCH REPORT**

International application No.

PCT/JP2012/007266

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-27298 A  (Toshiba Fuel Cell Power Systems Corp., Toshiba Corp.), 04 February 2010 (04.02.2010), entire text (Family: none) | 1-8 |

Form PCT/ISA/210 (continuation of second sheet) (July 2009)

41

**EP 2 787 566 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005129252 A
- JP 2010027297 A